(19) **Europäisches Patentamt** / **European Patent Office** / **Office européen des brevets**

(11) **EP 4 251 960 B1**

(12) **EUROPÄISCHE PATENTSCHRIFT**

(45) Veröffentlichungstag und Bekanntmachung des Hinweises auf die Patenterteilung:
**22.01.2025 Patentblatt 2025/04**

(21) Anmeldenummer: **21820159.8**

(22) Anmeldetag: **24.11.2021**

(51) Internationale Patentklassifikation (IPC):
**G01J 1/02** (2006.01)          **G01M 11/06** (2006.01)

(52) Gemeinsame Patentklassifikation (CPC):
**G01J 1/0242; G01M 11/064;** G01J 2001/4247

(86) Internationale Anmeldenummer:
**PCT/EP2021/082815**

(87) Internationale Veröffentlichungsnummer:
**WO 2022/112324 (02.06.2022 Gazette 2022/22)**

(54) **VERFAHREN UND GONIORADIOMETER ZUR RICHTUNGSABHÄNGIGEN MESSUNG MINDESTENS EINER LICHTTECHNISCHEN ODER RADIOMETRISCHEN KENNGRÖSSE EINER IN EIN OBJEKT EINGEBAUTEN OPTISCHEN STRAHLUNGSQUELLE**

METHOD AND GONIORADIOMETER FOR THE DIRECTION-DEPENDENT MEASUREMENT OF AT LEAST ONE LIGHTING OR RADIOMETRIC CHARACTERISTIC VARIABLE OF AN OPTICAL RADIATION SOURCE INSTALLED IN AN OBJECT

PROCÉDÉ ET GONIORADIOMÈTRE POUR LA MESURE EN FONCTION DE LA DIRECTION D'AU MOINS UNE GRANDEUR CARACTÉRISTIQUE D'ÉCLAIRAGE OU DE RADIOMÉTRIE D'UNE SOURCE DE RAYONNEMENT OPTIQUE INSTALLÉE DANS UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2020 DE 102020131662**

(43) Veröffentlichungstag der Anmeldung:
**04.10.2023 Patentblatt 2023/40**

(73) Patentinhaber: **LMT Lichtmesstechnik GmbH Berlin**
**10587 Berlin (DE)**

(72) Erfinder:
• **REINERS, Thomas**
  **10589 BERLIN (DE)**
• **HAMMER, Raymund**
  **14057 Berlin (DE)**
• **DIEM, Carsten**
  **13505 Berlin (DE)**

(74) Vertreter: **Müller, Wolfram Hubertus**
**Patentanwalt**
**Teltower Damm 15**
**14169 Berlin (DE)**

(56) Entgegenhaltungen:
**EP-A1- 3 940 356          WO-A1-2016/116300**
**US-A1- 2009 185 173      US-A1- 2017 165 848**

**Beschreibung**

Die Erfindung betrifft ein Verfahren und ein Gonioradiometer zur richtungsabhängigen Messung mindestens einer lichttechnischen oder radiometrischen Kenngröße einer in ein Objekt eingebauten optischen Strahlungsquelle.

Für die Messung von lichttechnischen oder radiometrischen Kenngrößen von Lampen und Leuchten werden üblicherweise Gonioradiometer verwendet. Dabei handelt es sich um mechanisch-optische Messsysteme, mit denen die Richtungsabhängigkeit von Größen zur Beschreibung optischer Strahlung bestimmbar ist. Beispielsweise können je nach verwendetem Sensor oder Messgerätekopf die Lichtstärkeverteilung oder der Farbverteilungskörper einer Lichtquelle bestimmt werden. Die Licht- oder Strahlungsquelle ist mit ihrem Lichtschwerpunkt im Zentrum des Gonioradiometers und dabei im Koordinatenursprung eines Kugel-Koordinatensystems angeordnet. Messwerte einer lichttechnischen oder radiometrischen Kenngröße können für diesen Fall goniometrisch, d. h. für alle Richtungen, durch Rotieren der Licht- oder Strahlungsquelle oder durch Bewegen des Sensors nacheinander in verschiedenen Winkelbereichen gemessen werden.

Durch Auswertung einzelner Richtungen und/oder durch die Integration der Messergebnisse über Teilbereiche oder den gesamten Raumwinkel eines Verteilungskörpers ergeben sich die lichttechnischen oder radiometrischen Kenngrößen für die Quelle.

Eine lichttechnische oder radiometrische Kenngröße wie z.B. die Lichtstärke ist eine richtungsabhängige Größe, deren Ausstrahlungsrichtung allgemein durch zwei Winkel in einem mit der Lichtquelle verbundenem Kugelkoordinatensystem angegeben werden kann. Es hat sich die Beschreibung durch bestimmte Ebenensysteme durchgesetzt, die als A-Ebenen, B-Ebenen und C-Ebenen bezeichnet werden. Diese Ebenen sind in dem Dokument CIE No 70 (1987): "The measurement of absolute luminous intensity distributions", Central Bureau of the CIE, ISBN 3 900 734 05 4 beschrieben.

In der Praxis haben sich bestimmte Gonioradiometertypen bewährt, die ebenfalls im Dokument CIE No 70 (1987) definiert sind. Bei Gonioradiometern des Typs 1.1 bis 1.3 wird die Lichtquelle während einer Messung rotiert, während der Sensor ortsstabil ist. Bei Gonioradiometern des Typs 3 wird die Strahlungsquelle um eine Achse gedreht und ein Sensor entlang einer geraden Linie, die parallel zur Drehachse verläuft, verfahren. Dabei ist die Lichtquelle bzw. Strahlungsquelle mit ihrem Lichtschwerpunkt bzw. Strahlungsschwerpunkt im Zentrum des Gonioradiometers angebracht.

Es besteht zunehmend ein Interesse, lichttechnische oder radiometrische Kenngrößen von Lampen und Leuchten in dem Zustand zu erfassen, in dem diese sich bei ihrer Nutzung befinden, also in ihrem eingebauten Zustand. Eine wichtige Anwendung hierbei ist die Messung der Qualität der Scheinwerferbeleuchtung und/oder der lichttechnischen Signalfunktionen eines Fahrzeugs im eingebauten Zustand. Eine derartige Prüfung unterscheidet sich von den üblichen Tests an lichttechnischen Komponenten von Fahrzeugen (Scheinwerfern, Leuchten) insofern, dass auch Einflüsse und Toleranzen, welche durch den Einbau dieser Komponenten am Fahrzeug bedingt sind, erfasst werden. Diese Einflüsse sind vor allem gegeben durch

- die Abweichung von der Soll-Einbaulage, z.B. durch Toleranzen bedingt in der Karosserie-Fertigung;
- die Abweichung des Fahrzeuges von der Horizontalen, z.B. bedingt durch Toleranzen des Fahrwerks, insbesondere der Eintauchwege von Federn, durch Beladung (Anzahl der Insassen, Betriebsmittel, d.h. voller oder leerer Tank) oder Einfluss des Luftdrucks in den Reifen; und
- Güte der Scheinwerfer-Einstellung am Ende der Fahrzeug-Fertigung.

Die WO 2016/116300 A1 offenbart ein Gonioradiometer zur richtungsabhängigen Messung mindestens einer lichttechnischen oder radiometrischen Kenngröße einer optischen Strahlungsquelle, welches aufweist: eine Vorrichtung zum Bewegen einer Strahlungsquelle während eines Messvorgangs um eine erste Achse und um eine senkrecht auf der ersten Achse stehende zweite Achse; eine Messwand mit homogener Reflexion, an der das Licht der Strahlungsquelle reflektiert wird; und eine ortsfest und unbeweglich angeordnete Kamera mit einer Optik und einem 2-dimensionalen Sensor-Chip. Dabei ist die Kamera derart angeordnet, dass sie an der Messwand reflektiertes Licht erfasst, wobei das reflektierte Licht von der Optik der Kamera auf den Sensor-Chip der Kamera abgebildet wird, und wobei der Sensor-Chip bei Rotation der Strahlungsquelle während eines Messvorgangs Messwerte aufnimmt, die die lichttechnische oder radiometrische Kenngröße im Wesentlichen auf einer Kugeloberfläche um den Strahlungsschwerpunkt der Strahlungsquelle angeben. Die Lichtverteilung bildet dabei auf der Messwand ein 2-dimensionales Koordinatensystem, welches in ein dreidimensionales Koordinatensystem umgerechnet wird, wobei die Lichtquelle sich jeweils im Zentrum des Koordinatensystems befindet.

Die US 2017/165848 A1 beschreibt ein Verfahren und ein Gonioradiometer zur richtungsabhängigen Messung mindestens einer lichttechnischen oder radiometrischen Kenngröße einer optischen Strahlungsquelle. Es ist vorgesehen, dass ein Sensor oder die Strahlungsquelle an einem Mehr-Achsen-Schwenkarm-Roboter befestigt ist und der Roboter während eines Messvorgangs, bei dem Messwerte erfasst werden, um genau eine seiner Achsen verschwenkt wird. Dabei erfolgt eine gonioradiometrische Messung in einem Koordinatensystem, in dem der Lichtschwerpunkt ortsfest im Ursprung des Koordinatensystems liegt.

Der vorliegenden Erfindung liegt die Aufgabe zugrunde, ein Verfahren und ein Gonioradiometer zur richtungsabhängigen Messung mindestens einer lichttechnischen oder radiometrischen Kenngröße einer optische Strahlungsquelle bereitzustellen, die eine Erfassung der Kenngröße der Strahlungsquelle im eingebauten Zustand der Strahlungsquelle ermöglicht.

Diese Aufgabe wird erfindungsgemäß durch ein Verfahren mit den Merkmalen des Anspruchs 1, ein Verfahren mit den Merkmalen des Anspruchs 12 und ein Gonioradiometer mit den Merkmalen des Anspruchs 13 gelöst. Ausgestaltungen der Erfindung sind in den abhängigen Ansprüchen angegeben.

Danach sieht ein erster Erfindungsaspekt ein Verfahren zur richtungsabhängigen Messung mindestens einer lichttechnischen oder radiometrischen Kenngröße einer in ein Objekt eingebauten optischen Strahlungsquelle vor, wobei das Verfahren die folgenden Schritte umfasst (die nicht notwendigerweise in der angegebenen Reihenfolge ausgeführt werden müssen).

Das Objekt wird auf einem Drehteller angeordnet, der eine Drehachse aufweist, wobei die Drehachse des Drehtellers ein erstes Koordinatensystem definiert, dessen Ursprung z.B. durch den Schnittpunkt der Oberfläche des Drehtellers mit der Drehachse gebildet ist und dessen räumliche Achse mit der Drehachse zusammenfällt. Dabei wird das Objekt derart auf dem Drehteller angeordnet, dass der Strahlungsschwerpunkt der optischen Strahlungsquelle vom Ursprung des ersten Koordinatensystems und vor der Drehachse beabstandet ist. Wenn es sich bei dem Objekt beispielsweise um ein Fahrzeug handelt, so wird somit das Fahrzeug insgesamt auf dem Drehteller angeordnet, wobei der Strahlungsschwerpunkt des Scheinwerfers nicht auf der Achse des Drehtellers liegt.

Es erfolgt eine gonioradiometrische Messung, die eine Drehung des Objekts um eine Achse umfasst, wobei die gonioradiometrische Messung im ersten Koordinatensystem erfolgt und das Objekt auf dem Drehteller ausgehend von einer Ausgangsposition um die Drehachse des Drehtellers gedreht wird und die Drehachse des Drehtellers die Achse der gonioradiometrischen Messung darstellt. Dabei kann vorgesehen sein, dass die Drehachse des Drehtellers in vertikaler Richtung verläuft, wobei dies jedoch nicht zwingend ist.

Bei der gonioradiometrischen Messung erfolgt ein richtungsabhängiges Erfassen einer Messgröße der Strahlungsquelle für eine Vielzahl von Ausstrahlungsrichtungen bzw. Messwinkel, wobei Ausstrahlungsrichtungen, die im ersten Koordinatensystem definiert sind, jeweils gemessene Werte der Messgröße zugeordnet werden. Beispielsweise wird jeder in dem ersten Koordinatensystem definierten Ausstrahlungsrichtung jeweils ein durch einen Sensor erfasster Wert der Messgröße zugeordnet. Die gonioradiometrische Messung erfolgt dabei im ersten Koordinatensystem.

Es wird des Weiteren die Position des Strahlungsschwerpunkts der optischen Strahlungsquelle z.B. in der Ausgangsposition relativ zum Ursprung des ersten Koordinatensystems bestimmt. Dies kann erfolgen, bevor die gonioradiometrischen Messung beginnt. Es ist nun vorgesehen, dass die Messgröße für die Vielzahl von Ausstrahlungsrichtungen in einem zweiten Koordinatensystem berechnet wird, in dem der Strahlungsschwerpunkt der optischen Strahlungsquelle im Ursprung des Koordinatensystems liegt. Dies erfolgt auf der Grundlage der im ersten Koordinatensystem richtungsabhängig erfassten Messwerte der Messgröße und der Relativposition (d.h. der Position des Strahlungsschwerpunkts der optischen Strahlungsquelle relativ zum Ursprung des ersten Koordinatensystems). Die räumliche Verteilung der Messgröße wird somit von der im ersten Koordinatensystem gemessenen Verteilung in eine räumliche Verteilung, bei der der Strahlungsschwerpunkt der optischen Strahlungsquelle im Zentrum liegt, umgerechnet.

Bei der Messgröße kann es sich bereits um die zu messenden Kenngröße handeln oder die zu messende Kenngröße wird aus der Messgröße berechnet. Wenn beispielsweise die Messgröße die von einem Sensor gemessene Beleuchtungsstärke ist, so kann aus dieser die Lichtstärke der Strahlungsquelle als die zu messende Kenngröße abgeleitet werden. Dies erfolgt über eine Korrektur im Hinblick auf die Entfernung und den Einstrahlungswinkel zum Sensor, entsprechend der Ausgestaltung nach Anspruch 9.

Durch das durchgeführte Verfahren können Aussagen zur räumlichen Verteilung der Kenngröße für die Strahlungsquelle bereitgestellt werden, obwohl diese sich nicht im Ursprung des Koordinatensystems, in dem die gonioradiometrische Messung erfolgt, befindet.

Die Erfindung beruht somit auf dem Gedanken, die zu erfassende Kenngröße bzw. die zu testende Funktion nicht im Zentrum der Achsen des Gonioradiometers zu positionieren, sondern zunächst eine gonioradiometrische Messung mit azentrischer Positionierung der Strahlungsquelle vorzunehmen. Durch Kenntnis der azentrischen Platzierung der Strahlungsquelle auf dem Drehteller kann dann der jeweilige Messwinkel im System des Prüfobjektes bzw. der Strahlungsquelle berechnet werden. Die Umrechnung erfolgt aufgrund einer Koordinatentransformation zwischen den jeweiligen Koordinatensystemen.

Die Erfindung sieht mit anderen Worten vor, dass die Lichtverteilung bzw. Kenngrößenverteilung der Strahlungsquelle mittels zweier gekoppelter Koordinatensysteme bestimmt wird. Die Bewegung erfolgt in einem ersten Koordinatensystem, während die Lichtverteilung bzw. die Verteilung der zu messenden Kenngröße in einem zweiten Koordinatensystem berechnet wird.

Die Wahl der beiden gekoppelten Koordinatensysteme ist dabei derart, dass die Beziehungen zwischen den Winkeln (D/S) des ersten Koordinatensystems und den Winkeln (H/V) des zweiten Koordinatensystems bijektiv sind, d. h. es gibt ein-eindeutige mathematische Berechnungsfunktion, um von einem Koordinatensystem in das andere zu transformieren und es existiert auch eine eindeutige Umkehrfunktion, um von dem zweiten Koordinatensystem in das erste zurück zu transformieren.

Die Erfindung ist mit dem Vorteil verbunden, dass die zu messende Kenngröße der Strahlungsquelle im eingebauten Zustand exakt richtungsabhängig erfasst und quantitativ bewertet werden kann, obwohl die Strahlungsquelle nicht im Ursprung der radiometrischen Messung liegt. Hierdurch werden Messungen ermöglicht, die auch Einflüsse und Toleranzen berücksichtigen, welche durch den Einbau der Strahlungsquelle in ein Objekt, zum Beispiel in ein Fahrzeug bedingt sind.

Wie bereits erwähnt, sieht eine Ausgestaltung der Erfindung vor, dass das betrachtete Objekt ein Automobil bzw. ein Fahrzeug ist. Dieses wird insgesamt auf dem Drehteller platziert. Dabei können sukzessive verschiedene eingebaute Strahlungsquellen gemessen werden, beispielsweise das linke Scheinwerferlicht, das rechte Scheinwerferlicht, sowie Signallampen wie zum Beispiel Fahrtrichtungsanzeiger. Natürlich können die Scheinwerferlichter in verschiedenen Betriebsmoden wie Abblendlicht, Fernlicht und Standlicht gemessen werden. Die Erfindung ist aber beispielsweise auch an räumlich ausgedehnten Baugruppen realisierbar, die auf dem Drehteller angeordnet werden und eine azentrisch montierte Strahlungsquelle enthalten.

Die Drehachse des Drehtellers verläuft gemäß einer Ausgestaltung der Erfindung in der vertikalen Richtung. Dies bietet sich schon deswegen an, um das Gewicht des Objektes auf dem Drehteller gleichmäßig verteilen zu können. Grundsätzlich ist es jedoch ebenfalls denkbar, dass der Drehteller mit einer gewissen Schräge im Raum ausgerichtet ist, so dass seine Drehachse in einem Winkel zur vertikalen Richtung verläuft.

Naturgemäß ist es nicht möglich, zu jeder Ausstrahlungsrichtung die Kenngröße zu erfassen, da es unendlich viele Ausstrahlungsrichtungen gibt. Vielmehr wird ein bestimmtes Raster von Ausstrahlungsrichtungen erfasst, die jeweils einen bestimmten Raumwinkel, d.h. einen bestimmten Anteil am gesamten Raumwinkel repräsentieren. Um entsprechend einem solchen Raster Ausstrahlungsrichtungen zu definieren, ist es ausreichend, dass der Drehteller schrittweise gedreht wird, wobei Drehstellungen, die der Drehteller einnimmt, jeweils einer Ausstrahlungsrichtung entsprechen. Alternativ wird der Drehteller kontinuierlich gedreht, wobei zu bestimmten Zeitpunkten bzw. an definierten Winkeln Messwerte erfasst werden, die dann jeweils einer bestimmten Ausstrahlungsrichtung entsprechen.

Eine Ausgestaltung der Erfindung sieht vor, dass die gonioradiometrische Messung zusätzlich zu der Rotation des Objektes auf dem Drehteller die Erfassung der Kenngröße entlang einer geraden Linie abhängig von der Position entlang dieser Linie umfasst. Bei dieser Ausgestaltung ist das Gonioradiometer ein Gonioradiometer des Typs 3, wobei die Strahlungsquelle (auf dem Drehteller und dort azentrisch) um eine Achse gedreht und ein Sensor entlang einer geraden Linie verfahren wird.

So sieht eine Ausgestaltung hierzu vor, dass für die gonioradiometrische Messung ein Sensor eingesetzt wird, der entlang der geraden Linie verfahren wird und der für definierte Positionen auf der Linie Messwerte zur ausgestrahlten Strahlung aufnimmt. Der Sensor wird dabei bevorzugt auf einer vertikalen Linie verfahren, die parallel zur Drehachse des Drehtellers verläuft, so dass die Erfassung der Messgröße entlang einer vertikal verlaufenden Linie erfolgt, womit in Folge in Kombination mit der Drehung ein orthogonales Raster aufgespannt wird. Grundsätzlich kann der Sensor jedoch auf einer beliebig im Raum verlaufenden Linie verfahren werden. Auch kann alternativ statt eines Sensors eine Vielzahl von Sensoren vorgesehen sein, die entlang der geraden Linie angeordnet sind, so dass ein Verfahren eines Sensors nicht erforderlich ist.

Die Wahl dieses Goniometer-Typs 3 hat den Vorteil, dass das Objekt bzw. Fahrzeug nicht um eine horizontale Achse gekippt werden muss. Bei einer solchen Kippung würden durch die Gravitation Kräfte in der Fahrzeug-Aufhängung erzeugt, welche wiederum die bauartbedingte Ausrichtung des Fahrzeuges von der gedachten Horizontalen beeinflussen. Um mit einem solchen Goniometer-Typ eine lichttechnische Funktion im eingebauten Zustand am Fahrzeug konventionell messen zu können, d.h. ohne die Nutzung zweier verkoppelter Koordinatensysteme, müsste die zu messende Lichtquelle (Abblendlicht, Fahrtrichtungsanzeige, etc.) in das Zentrum der Drehachse gerückt werden, und nachdem diese am Fahrzeug fest verbaut ist, müsste das gesamte Fahrzeug lateral bewegt und dann wieder fixiert werden. Dies wiederum würde neben den mechanischen Herausforderungen auch einen viel größeren Raumbedarf zur Folge haben, so dass die Laborabmessungen um ein Vielfaches größer sein müssten.

Die vorliegende Erfindung sieht gemäß diesem Erfindungsaspekt daher vor, das Fahrzeug ohne Ansprüche an die Genauigkeit beliebig auf einer Drehvorrichtung zu positionieren und anschließend die Position der zu messenden Lichtfunktion in Bezug auf die Drehachse exakt zu vermessen.

Die Ebene des Drehtellers, auf dem das Objekt bzw. Fahrzeug steht, repräsentiert die Straßenebene und alle lichttechnischen Messgrößen werden in der weiteren Auswertung auf diese Ebene bezogen, um die durch das Fahrzeug auf der Straße hervorgerufene Beleuchtungssituation zu ermitteln.

Eine Ausführungsvariante sieht vor, dass als Messgröße die Beleuchtungsstärke gemessen und aus der Beleuchtungsstärke die Lichtstärke der Strahlungsquelle als zu messende Kenngröße mit der folgenden Formel berechnet wird:

$$I = \frac{E \cdot d^2}{\cos H \cdot \cos V}$$

wobei

I      die Lichtstärke,

E      die gemessene Beleuchtungsstärke,

d      der Abstand zwischen Lichtquelle und Sensor, und

(H,V)      die Winkel sind, unter denen ein parallel zur X-Achse fest ausgerichteter Sensor beleuchtet würde, d.h.

H      entspricht dem Azimutwinkel $\varphi$, und

V      entspricht 90° minus dem Polarwinkel $\theta$

in der üblichen Notation von Kugelkoordinaten.

Um aus der gemessenen Beleuchtungsstärke z.B. die Lichtstärke zu berechnen, müssen somit die Entfernung d zwischen Lichtquelle und Sensor sowie die Winkel H und V bekannt sein. Die Formel setzt voraus, dass der Sensor parallel zur X-Achse (H=0) ausgerichtet ist. Diese Abstandskorrektur berücksichtigt, dass die Sensorfläche des Sensors bzw. Photometers bei schrägem Lichteinfall mit reduzierter Intensität von Licht beaufschlagt wird, sowie die Entfernung zwischen der Strahlungsquelle und dem Sensor.

Eine Ausführungsvariante hierzu sieht vor, dass die gonioradiometrische Messung zusätzlich zu der Rotation des Objektes auf dem Drehteller und zu der Erfassung der Kenngröße entlang einer geraden Linie abhängig von der Position entlang dieser Linie die Erfassung der Kenngröße entlang einer zweiten geraden Linie abhängig von der Position entlang dieser zweiten Linie umfasst, wobei die erste Linie und die zweite Linie parallel verlaufen und in einem unterschiedlichen Abstand zum Ursprung des ersten Koordinatensystems angeordnet sind. Die beiden Linien bzw. Linearachsen sind dabei bevorzugt in verschiedenen Entfernungen, z.B. ohne Beschränkung der Allgemeinheit bei 25 m und 5 m angeordnet. Mit einer solchen Anordnung können sowohl Scheinwerfer als auch Signalfunktionen optimal in einer Einstellung am Fahrzeug gemessen werden.

Es wird darauf hingewiesen, dass der Strahlungsschwerpunkt einer Strahlungsquelle grundsätzlich auf verschiedene Arten definiert werden kann. Beispielsweise kann es sich um den Mittelpunkt einer Glühwendel handeln, welche Licht ausstrahlt. Eine andere Möglichkeit ist es, den Strahlungsschwerpunkt der Strahlungsquelle als den geometrischen Schwerpunkt eines Strahlungsbündels zu definieren, das durch eine Abschlussscheibe tritt, die die Strahlungsquelle gegenüber der Umgebung abgrenzt. Bei der Abschlussscheibe handelt es sich beispielsweise um das Scheinwerferglas, aus dem das Lichtbündel austritt. Dabei ist es üblich, dass ein auf diese Weise definierter Strahlungsschwerpunkt herstellerseitig mit einer Markierung in der Abschlussscheibe gekennzeichnet ist.

Eine weitere Ausgestaltung der Erfindung sieht vor, dass die Berechnung der richtungsabhängigen Kenngröße im zweiten Koordinatensystem aus den richtungsabhängig erfassten Werten der Messgröße im ersten Koordinatensystem dadurch erfolgt, dass die Koordinaten der im ersten Koordinatensystem erfassten Messwerte abgebildet werden auf entsprechende Koordinaten im zweiten Koordinatensystem. Dabei können grundsätzlich beliebige Koordinatensysteme eingesetzt werden, beispielsweise kartesische, zylindrische und Kugel-Koordinatensysteme. Beispielsweise ist in einem Kugel-Koordinatensystem jede Ausstrahlungsrichtung durch einen Azimutwinkel und einen Polarwinkel definiert.

Eine Ausführungsvariante mit Drehtisch und Linearachse sieht dabei vor, dass das erste Koordinatensystem ein zylindrisches Koordinatensystem ist, die Koordinaten der im ersten Koordinatensystem erfassten Werte in einem ersten Schritt auf ein weiteres zylindrisches Koordinatensystem umgerechnet werden, in dessen Ursprung der Strahlungsschwerpunkt der Strahlungsquelle liegt, und in einem zweiten Schritt auf ein Kugel-Koordinatensystem umgerechnet werden, in dessen Ursprung der Strahlungsschwerpunkt der Strahlungsquelle liegt, wobei das Kugel-Koordinatensystem das zweite Koordinatensystem ist. Die Umrechnung in ein Kugel-Koordinatensystem mit dem Strahlungsschwerpunkt der Strahlungsquelle im Ursprung erfolgt somit unter einer Zwischenberechnung der Koordinaten in einem Zwischen-Koordinatensystem. Hierbei handelt es sich jedoch lediglich um ein Ausführungsbeispiel. Grundsätzlich kann auch eine direkte Umrechnung zwischen dem ersten Koordinatensystem und dem zweiten Koordinatensystem erfolgen. Hierbei können beliebige geeignete mathematische Methoden eingesetzt werden.

Die zuvor beschriebene Ausführungsvariante sieht vor, dass für jede Ausstrahlungsrichtung zum einen aus dem Drehwinkel D der Drehscheibe und zum anderen aus der Höhe S des Sensors die Position des Sensors im ersten Koordinatensystem und daraus der Azimutwinkel H und ein Höhenwinkel V der Sensorposition im zweiten Koordinatensystem berechnet werden und der von dem betrachteten Sensor gemessene Wert der Messgröße dieser durch Azimutwinkel und Höhenwinkel definierten Ausstrahlungsrichtung zugeordnet wird. Dabei wird der jeweilige Messwert zusätzlich um die Entfernung und den Einstrahlwinkel zum Sensor korrigiert, um aus der Messgröße die Kenngröße zu erhalten, insbesondere um aus der Beleuchtungsstärke die Lichtstärke zu berechnen.

Gemäß einer weiteren Ausgestaltung wird die gonioradiometrische Messung nicht entsprechend dem Typ 3 durchgeführt, sondern unter Verwendung einer Kamera. Hierbei ist vorgesehen, dass die gonioradiometrische Messung zusätzlich zu der Rotation des Objektes auf dem Drehteller die Erfassung der Messgröße mittels einer ortsfest angeordneten Kamera umfasst, wobei die von der Strahlungsquelle ausgesandte Strahlung an einer reflektierenden Messwand mit diffuser, ungerichteter Reflexion reflektiert und von der Kamera als Leuchtdichte-Verteilung auf der Messwand für mindestens zwei Stellungen des Drehtellers erfasst wird. Dabei wird die von der Kamera erfasste Leuchtdichte-Verteilung mithilfe einer Koordinatentransformation in eine Leuchtdichte-Verteilung im zweiten Koordinatensystem umgerechnet wird. Dabei stellt die Leuchtdichte-Verteilung die Messgröße dar.

Diese Messordnung baut grundsätzlich auf einer gonioradiometrischen Messanordnung auf, wie sie in der WO 2016/116300 A1 beschrieben ist.

Gemäß dieser Ausführungsvariante werden für die gonioradiometrische Messung nur die Drehbewegung des Fahrzeugs und das Kamera-Messwand-Messsystem benötigt, um ganze Winkelbereiche in einem einzigen Leuchtdichtebild erfassen zu können. Die von der Kamera auf der Wand gemessene Leuchtdichte-Verteilung wird anschließend mit Hilfe einer Koordinaten-Transformation in die Lichtstärkeverteilung des Scheinwerfers umgewandelt.

Dabei definiert bereits die in einer Stellung des Objekts auf dem Drehteller auf der Messwand dargestellte Leuchtdichte-Verteilung einen relativ großen Raumwinkel, d. h. in dem durch die Messwand definierten Raumwinkel werden durch das Objektiv der Kamera 2-dimensionale Messwerte für eine Vielzahl von Ausstrahlungsrichtungen erfasst. Wenn die Messwand hoch genug ist, um die vertikale Verteilung der Strahlungsquelle im Fernfeld vollständig abzubilden, kann bereits über eine Darstellung bzw. Leuchtdichte-Verteilung auf der Messwand die Abhängigkeit der zu messenden Kenngröße vom Polarwinkel bestimmt werden. Durch Drehen des Drehtellers werden andere Raumwinkel mit anderen Azimutwinkeln auf der Messwand dargestellt. Abhängig von der Breite der Messwand wird die Leuchtdichte-Verteilung für mindestens zwei Stellungen des Drehtellers erfasst (sonst läge keine gonioradiometrische Messung vor), wobei die gesamte Lichtverteilung durch ein Aneinanderreihen der einzelnen Raumwinkel-Raster zusammengesetzt wird.

Auch bei der Ausführungsvariante mit Kamera werden gekoppelte Koordinatensysteme eingesetzt, d.h. die Transformation von den Wandkoordinaten, in denen die Leuchtdichtekamera die Messwerte ermittelt, in die Kugelkoordinaten im Bezugssystem des Scheinwerfers ändert sich mit der Drehung des Scheinwerfers im Raum. Wenn die Koordinaten des Scheinwerfers abhängig vom Winkel der Drehvorrichtung bekannt sind, lässt sich wiederum eine bijektive Abbildung finden, mit der man aus dem Winkel der Drehvorrichtung und der Höhe des Scheinwerfers die Lichtverteilung im Bezugssystem des Prüfobjektes berechnen kann.

Mehrere Teilwinkelbereiche können dann zur gesamten Winkelverteilung zusammengefasst werden. Der Vorteil eines solchen Verfahrens ist, dass die Daten mit einer Kombination aus Fahrzeug-Drehung und Kamera-Messung schneller gewonnen werden, als dies mit der sequenziellen Raster-Messung basierend auf einem Sensor bzw. Photometer möglich ist und gleichzeitig keine Anforderungen an die Position des Scheinwerfers auf der Drehscheibe gestellt werden müssen - sie muss lediglich exakt bestimmt werden.

Eine Ausgestaltung sieht vor, dass die Messwand im Fernfeld der Lichtverteilung der Strahlungsquelle angeordnet ist, d. h. in einer Entfernung, in der die Strahlungsquelle näherungsweise als Punktlichtquelle betrachtet werden kann. Beispielsweise ist die Messwand in einer Entfernung von 25 m von der Strahlungsquelle in deren Ausgangsposition entfernt.

Eine weitere Ausgestaltung sieht vor, dass das Licht der Strahlungsquelle zusätzlich einen weiteren Sensor direkt beleuchtet und das von diesem Sensor erfasste Signal für eine Kalibrierung der Kamera eingesetzt wird. Da die Messunsicherheit einer Kamera-Messung erheblich größer als die einer Sensor-Messung ist (typischerweise mittels eines Photometers), können die mit der Kamera gewonnenen Daten mittels des Sensors punktuell korrigiert werden. Bei dem weiteren Sensor kann sich um einen Sensor handeln, der vor oder seitlich der Messwand angeordnet ist. Weiter ist es möglich, dass der Sensor hinter der Messwand angeordnet ist und durch eine Öffnung in der Messwand bestrahlt wird.

Der Vorteil einer Korrektur unter Verwendung eines weiteren Sensors besteht neben der Reduktion der Messunsicherheit auch darin, dass die Rückführbarkeit der Messwerte durch den Sensor bzw. das Photometer erfolgt und dass die Messwand-Kamera-Kombination nicht absolut kalibriert werden muss.

Eine weitere Ausgestaltung der Erfindung sieht vor, dass die gonioradiometrische Messung zusätzlich zu der Rotation des Objektes auf dem Drehteller ein Kippen des Drehtellers oder Objekts um eine Achse senkrecht zur Drehachse vorsieht, wobei das Objekt für eine Mehrzahl von Neigungswinkeln auf dem Drehteller rotiert wird und für jede Kombination von Rotationswinkel und Neigungswinkel die Messgröße erfasst wird, wobei die Messgröße aufgrund der gonioradiometrischen Messung auf einer Kugeloberfläche um den Strahlungsschwerpunkt der Strahlungsquelle erfasst wird. Insbesondere wird das Objekt zusätzlich um die horizontale Achse gekippt (durch Kippen des Drehtellers oder Kippen des Objekts). Dabei kann vorgesehen sein, dass für die gonioradiometrische Messung ein ortsfester Sensor eingesetzt wird, der für jede Kombination von Rotationswinkel und Neigungswinkel einen Messwert zur ausgestrahlten Strahlung aufnimmt.

Der Winkel, um den der Drehteller bzw. das Objekt gekippt wird, wird dabei über ein geeignetes Messsystem erfasst, wobei entweder der Kippwinkel des Drehtellers oder der Kippwinkel der Karosserie erfasst wird (wenn das Objekt, in das die Strahlungsquelle eingebaut ist, ein Fahrzeug ist).

Eine solche Anordnung weist den Vorteil auf, dass es nicht erforderlich ist, für eine gonioradiometrischen Messung einen Sensor auf einer Linearachse zu verfahren, um den Höhenwinkel im gekoppelten Koordinatensystem zu messen, sondern dies kann durch Neigung des Fahrzeugs nach vorn oder hinten erfolgen kann. Dadurch kann das Photometer feststehend ausgebildet sein, was beispielsweise vorteilhaft ist, wenn die Raumhöhe begrenzt ist. Allerdings ist es bei dieser Ausführungsvariante erforderlich, die eingangs erwähnten Nachteile einer Fahrzeugneigung auf das Fahrwerk zu erfassen und zu korrigieren. Dies kann z.B. durch links und rechts vom Fahrzeug angebrachte Kameras geschehen, welche auf der Karoserie angebrachte Markierungspunkte vermessen und somit den realen Kippwinkel des Fahrzeugs im Vergleich zur horizontalen Nullposition erfassen, ohne dass Fahrwerkseinflüsse wie Einfederung oder Luftdruck der Reifen den vertikalen Winkel verfälschen können.

Die Messung erfolgt bei diesem Ausführungsbeispiel durch eine Drehung der Plattform, auf der das geneigte Fahrzeug aufgestellt ist, in Kombination mit der Verkippung, so dass sich der Scheinwerfer auf einem um den Verkippungswinkel geneigten Kreisbogen um den Mittelpunkt der Drehvorrichtung bewegt. Allerdings wird die Messgeometrie nun durch Kopplung eines Kugel-Koordinatensystems mit Ursprung auf einer Kugeloberfläche beschrieben.

Eine Ausführungsvariante hierzu sieht vor, dass die Berechnung der richtungsabhängigen Messgröße im zweiten Koordinatensystem aus den richtungsabhängig erfassten Werten der Messgröße im ersten Koordinatensystem dadurch erfolgt, dass die Koordinaten der im ersten Koordinatensystem erfassten Werte abgebildet werden auf entsprechende Koordinaten im zweiten Koordinatensystem, wobei das zweite Koordinatensystem ein Kugel-Koordinatensystem ist, dessen Ursprung sich auf einer Kugeloberfläche bewegt.

Gemäß einem zweiten Erfindungsaspekt betrifft die vorliegende Erfindung ein Verfahren zur richtungsabhängigen Messung mindestens einer lichttechnischen oder radiometrischen Kenngröße einer in ein Objekt eingebauten optischen Strahlungsquelle, dass die folgenden Schritte umfasst:

- Anordnen des Objekts an oder auf einem Halteelement, dass dazu vorgesehen und ausgebildet ist, das Objekt um eine erste Achse und um eine senkrecht auf der ersten Achse stehende zweite Achse zu drehen, wobei das Objekt derart an dem Halteelement angeordnet wird, dass der Strahlungsschwerpunkt der optischen Strahlungsquelle außerhalb des Ursprung eines durch die erste Achse und die zweite Achse gebildeten ersten Koordinatensystems liegt,
- Bestimmen der Position des Strahlungsschwerpunkts der optischen Strahlungsquelle relativ zum Ursprung des ersten Koordinatensystems (Relativposition),
- Vornahme einer gonioradiometrischen Messung, die eine Drehung des Objekts um beide Achsen umfasst, wobei die gonioradiometrische Messung in dem ersten Koordinatensystem erfolgt,
- richtungsabhängiges Erfassen einer Messgröße der Strahlungsquelle mittels der gonioradiometrischen Messung für eine Vielzahl von Ausstrahlungsrichtungen, wobei Ausstrahlungsrichtungen, die im ersten Koordinatensystem definiert sind, jeweils gemessene Werte der Messgröße zugeordnet werden,
- Berechnen der richtungsabhängigen Messgröße für die Vielzahl von Ausstrahlungsrichtungen in einem zweiten Koordinatensystem, in dem der Strahlungsschwerpunkt der optischen Strahlungsquelle im Koordinatenursprung liegt, aus den richtungsabhängig erfassten Werten der Messgröße, die im ersten Koordinatensystem ermittelt worden sind, und der Relativposition,
- wobei die Messgröße gleich der zu messenden Kenngröße ist oder die zu messende Kenngröße aus der Messgröße berechnet wird.

Dieses Verfahren unterscheidet sich von dem Verfahren gemäß Anspruch 1 dadurch, dass das Objekt nicht auf einem Drehteller angeordnet wird, sondern stattdessen um zwei Achsen gedreht wird, entsprechend einer klassischen gonioradiometrischen Messung mit einem Gonioradiometer des Typs 1, wobei jedoch auch hier der Strahlungsschwerpunkt der Strahlungsquelle sich außerhalb des Ursprungs des Koordinatensystems befindet, in dem die Messung erfolgt, und anschließend eine Umrechnung in das zweite Koordinatensystem erfolgt. Das Objekt ist dabei beliebig im Raum angeordnet und wird beispielsweise durch einen Roboter als Halteelement gehalten, der das Objekt um mehrere Achsen drehen kann.

Ein weiterer Aspekt der vorliegenden Erfindung betrifft ein Gonioradiometer zur richtungsabhängigen Messung mindestens einer lichttechnischen oder radiometrischen Kenngröße einer in ein Objekt eingebauten optischen Strahlungsquelle, wobei das Gonioradiometer umfasst:

- einen Drehteller, der eine Drehachse aufweist, wobei die Drehachse des Drehtellers ein erstes Koordinatensystem definiert, dessen Ursprung durch den Schnittpunkt der Oberfläche des Drehtellers mit der Drehachse gebildet ist und dessen räumliche Achse mit der Drehachse zusammenfällt, und wobei der Drehteller dazu vorgesehen ist, das Objekt derart aufzunehmen, dass der Strahlungsschwerpunkt der optischen Strahlungsquelle vom Ursprung des ersten Koordinatensystems beabstandet ist,
- mindestens einen Sensor, der dazu ausgebildet und vorgesehen, eine Messgröße zu messen,

- wobei der Drehteller und der mindestens eine Sensor dazu ausgebildet sind, eine gonioradiometrische Messung im ersten Koordinatensystem durchzuführen, die eine Drehung des Objekts um die Drehachse des Drehtellers umfasst, wobei die Messgröße mittels der gonioradiometrischen Messung für eine Vielzahl von Ausstrahlungsrichtungen richtungsabhängig erfasst wird, wobei Ausstrahlungsrichtungen, die im ersten Koordinatensystem definiert sind, jeweils gemessene Werte der Messgröße zugeordnet werden,
- eine Recheneinheit zum Berechnen der Messgröße für die Vielzahl von Ausstrahlungsrichtungen in einem zweiten Koordinatensystem, in dem der Strahlungsschwerpunkt der optischen Strahlungsquelle im Ursprung des Koordinatensystem liegt, aus der Position des Strahlungsschwerpunkt der optischen Strahlungsquelle relativ zum Ursprung des ersten Koordinatensystems und aus den richtungsabhängig erfassten Werten der Messgröße, die im ersten Koordinatensystem ermittelt wurden,
- wobei die Recheneinheit des Weiteren dazu ausgebildet ist, aus der Messgröße die zu messende Kenngröße zu berechnen, sofern nicht die Messgröße bereits die zu messende Kenngröße ist.

Mit einem solchen Gonioradiometer ist es möglich, ein Verfahren gemäß Anspruch 1 durchzuführen. Es kann insbesondere vorgesehen sein, dass das Gonioradiometer ein Gonioradiometer vom Typ 3 realisiert, wobei der mindestens eine Sensor die Messgröße entlang einer geraden Linie abhängig von der Höhenposition entlang dieser Linie erfasst.

Mit dem erfindungsgemäßen Gonioradiometer kann insbesondere die Qualität der Scheinwerferbeleuchtung bzw. der lichttechnischen Signalfunktionen eines Fahrzeuges im eingebauten Zustand beurteilt werden kann. Eine derartige Prüfung unterscheidet sich von den üblichen Tests an lichttechnischen Komponenten von Fahrzeugen (Scheinwerfern, Leuchten) insofern, dass auch Einflüsse und Toleranzen, welche durch den Einbau dieser Komponenten am Fahrzeug bedingt sind, erfasst werden.

In Ausgestaltungen der Erfindung ist das Gonioradiometer dazu vorgesehen und ausgebildet, die in den Ansprüchen 2-18 angegebenen Verfahrensvarianten durchzuführen.

Eine Ausführungsvariante sieht vor, dass das Gonioradiometer des Weiteren aufweist:

- eine reflektierende Messwand mit diffuser Reflexion, die das von der Strahlungsquelle ausgesandte Licht reflektiert,
- eine ortsfest und unbeweglich angeordnete Kamera mit einem 2-dimensionalen Sensor-Chip, wobei die Pixel des Sensor-Chips den mindestens einen Sensor bilden,
- wobei die Kamera derart angeordnet und dazu ausgebildet ist, dass sie an der Messwand reflektiertes Licht für mindestens zwei Stellungen des Drehtellers erfasst, wobei das reflektierte Licht auf den Sensor-Chip der Kamera abgebildet wird, und wobei das reflektierte Licht von der Kamera als Leuchtdichte-Verteilung auf der Messwand erfasst wird,
- wobei die Recheneinheit dazu ausgebildet ist, die von der Kamera erfasste Verteilung der Leuchtdichte mithilfe einer Koordinatentransformation in eine Leuchtdichte-Verteilung im zweiten Koordinatensystem umzurechnen.

Eine weitere Ausführungsvariante sieht vor, dass

- der mindestens eine Sensor einen ortsfesten Sensor umfasst,
- der Drehteller dazu ausgebildet ist, ein auf ihm angeordnetes Objekt zusätzlich zu einer Rotation um die Drehachse um eine Achse senkrecht zur Drehachse zu kippen, oder das Objekt um eine solche Achse kippbar angeordnet ist
- wobei der Drehteller bzw. das Objekt und der mindestens eine Sensor bei einer gonioradiometrischen Messung derart zusammenwirken, dass das Objekt bei der gonioradiometrischen Messung für eine Mehrzahl von Neigungswinkeln auf dem Drehteller rotiert wird und der ortsfeste Sensor für jede Kombination von Rotationswinkel und Neigungswinkel die zu messende Kenngröße erfasst.

Es wird darauf hingewiesen, dass im Sinne der vorliegenden Offenbarung die nachfolgend genannten Begriffe wie folgt definiert sind.

Die Begriffe lichttechnisch und photometrisch können auch den begriff radiometrisch umfassen, insofern infrarote (IR) oder ultraviolette (UV) Kenngrößen gemessen werden.

Der Begriff Sensor umfasst alle Ausführungsformen zur Messung von optischer Strahlung (Ultraviolett, sichtbares Licht und Infrarot) im Wellenlängenbereich von 100nm (UV-C) bis 1 mm (IR-C). Gemäß einem Ausführungsbeispiel ist Sensor als Photometer ausgeführt.

Die Begriffe Goniophotometer und Gonioradiometer werden als Synonym benutzt, wenn mit einem beliebigen Sensor (photometrisch oder radiometrisch) die Lichtverteilung einer lichttechnischen Einrichtung erfasst wird. Wenn von Gonioradiometern die Rede ist, so sind damit immer alle Ausführungsformen gemeint, unabhängig davon, welcher Sensor zum Einsatz kommt.

Der Begriff Fahrzeuge kann Fahrzeuge aller Art, insbesondere für den Verkehr auf Stra-βen, auf Schienen, im Wasser oder in der Luft umfassen. Die nachfolgenden Ausführungsbeispiele beziehen sich in der Regel auf Straßenfahrzeuge für den Individualtransport von Personen (PKWs).

Der Begriff lichttechnische Einrichtungen kann, neben Scheinwerfern zur Ausleuchtung der Straße oder Signaleinrichtungen von Fahrzeugen auch lichttechnische Einrichtungen von Verkehrswegen umfassen.

Die Erfindung wird nachfolgend unter Bezugnahme auf die Figuren der Zeichnung anhand mehrerer Ausführungsbeispiele näher erläutert. Es zeigen:

Figur 1    den grundlegenden Aufbau eines Gonioradiometers, bei dem für eine gonioradiometrische Messung ein auf einer Drehscheibe angeordnetes Objekt, in das azentrisch eine Strahlungsquelle eingebaut ist, gedreht und ein Sensor entlang eines Mastes vertikal verfahren wird;

Figur 2    schematisch ein Zylinder-Koordinatensystem, dessen Ursprung sich auf einem Kreisbogen bewegt;

Figur 3    schematisch die Messgeometrie bei einem Gonioradiometer gemäß der Figur 1;

Figur 4    schematisch eine vergrößerte Darstellung der Drehscheibe und des Objekts der Messgeometrie der Figur 3;

Figur 5    schematisch eine Koordinatenabbildung von einem Zylinder-Koordinatensystem, dessen Ursprung sich auf einem Kreisbogen bewegt, auf ein Kugel-Koordinatensystem, dessen Ursprung sich auf einem Kreisbogen bewegt;

Figur 6    eine Abwandlung des Gonioradiometers der Figur 1, bei der zwei vertikale Masten mit daran verfahrbaren Sensoren in unterschiedlichem Abständen zum Drehteller vorgesehen sind;

Figur 7    ein weiteres Ausführungsbeispiel eines Gonioradiometers, wobei das Gonioradiometer zusätzlich zu einem rotierenden Drehteller eine reflektierende Messwand und eine Kamera umfasst;

Figur 8    schematisch ein Kugel-Koordinatensystem, dessen Ursprung sich auf einem Kreisboden bewegt und welches auf einer Projektionswand abgebildet wird;

Figur 9    schematisch ein Kugel-Koordinatensystem, dessen Ursprung sich auf einer Kugeloberfläche bewegt; und

Figur 10    die Darstellung eines Kugel-Koordinatensystems.

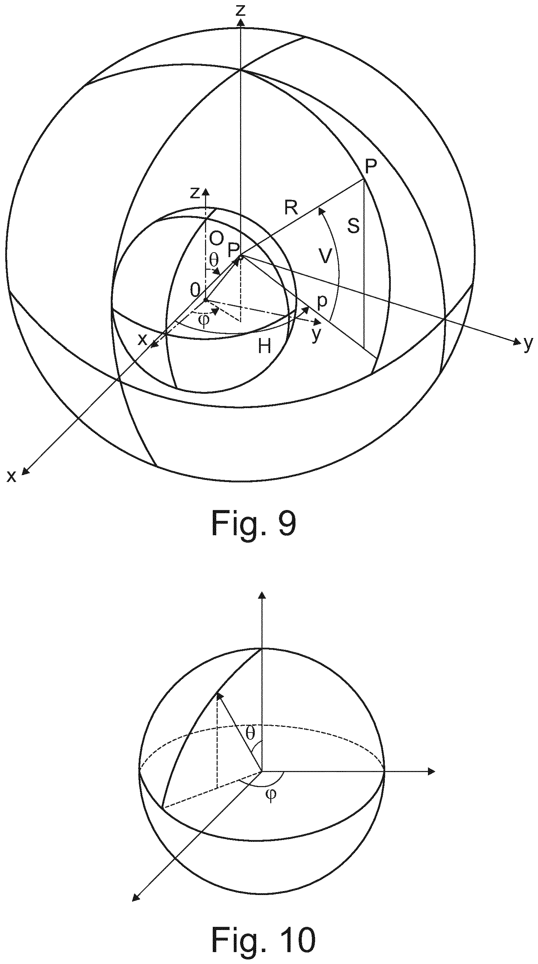

Zum allgemeinen Hintergrund der Erfindung wird zunächst auf die Figur 10 Bezug genommen. Die Figur 10 stellt ein Kugel-Koordinatensystem unter Darstellung der Definition der Winkel Phi $\varphi$ und Theta $\theta$ dar. Befindet sich eine Strahlungsquelle im Ursprung eines solchen Kugel-Koordinatensystems, so könnten lichttechnische oder radiometrische Kenngrößen der Strahlungsquelle goniometrisch, d. h. für alle Richtungen durch Rotation der Strahlungsquelle oder durch Bewegen eines Sensors nacheinander in den Winkelbereichen - 180 ° $\leq \varphi \leq$ 180 ° und $0 \leq \theta \leq$ 180 ° gemessen werden. Durch zwei Winkel $\varphi$, $\theta$ kann somit eine Ausstrahlungsrichtung definiert werden.

Allgemein gilt, dass durch eine gonioradiometrische Messung einer Vielzahl i von Ausstrahlungsrichtungen bzw. Winkelpaaren $\varphi_i$, $\theta_i$ jeweils eine bestimmte Lichtstärke oder andere lichttechnische oder radiometrische Kenngrößen einer Strahlungsquelle zugeordnet werden, die auf einer Kugeloberfläche bzw. einem Teilbereich einer Kugeloberfläche mittels eines Sensors gemessen oder die aus einem durch den Sensor erfassten Messwert abgeleitet werden. Hierdurch wird eine räumliche Verteilung der Lichtstärke bzw. der gemessenen Kenngröße bestimmt, die die Strahlungsquelle definiert. Die genaue Bestimmung der räumlichen Verteilung bzw. die genaue Einhaltung vorgegebener räumlicher Werte der betrachteten Kenngröße ist beispielsweise bei Scheinwerfern von Fahrzeugen von herausragender Bedeutung.

Bei der Vermessung von Scheinwerfern von Fahrzeugen kann vorgesehen sein, die Scheinwerfer (links bzw. rechts) als Einzelobjekte erst einzeln mit einem herkömmlichen Gonioradiometer zu vermessen und anschließend die Lichtverteilungen der einzelnen Scheinwerfer zu überlagern, um die Lichtverteilung auf der Straße zu simulieren. Eine derartige Komponenten-Messung mit einem Goniometer vernachlässigt dabei eine Vielzahl von Faktoren und berücksichtigt insbesondere nicht den Einbauzustand am Fahrzeug.

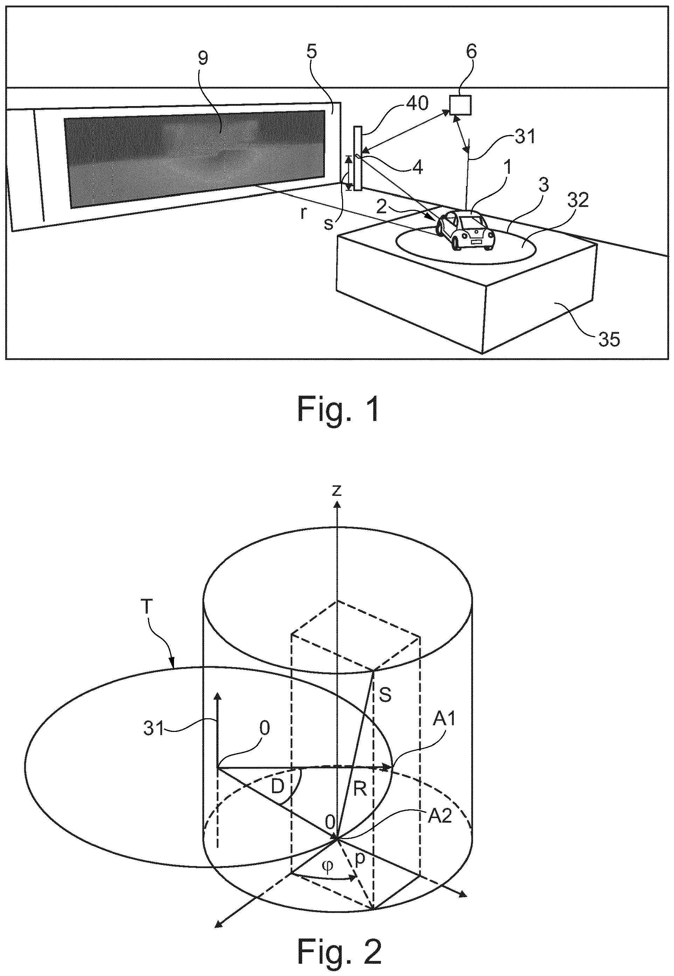

Die Figur 1 zeigt ein erstes Ausführungsbeispiel eines erfindungsgemäßen Gonioradiometers. Das Gonioradiometer umfasst einen Drehteller 3, der um eine Drehachse 31 rotierbar ist. Der Drehteller 3 befindet sich auf einem Podest 35. Dies ist allerdings nur beispielhaft zu verstehen. Alternativ können andere Maßnahmen vorgesehen sein, die es ermöglichen, dass auch ein von der Ebene des Drehtellers 3 nach unten abstrahlender Winkelbereich lichttechnisch erfasst werden kann, beispielsweise die Anordnung des Drehtellers 3 in einem höher gelegenen Zwischengeschoss.

Der Drehteller 3 weist zumindest im Bereich des Fahrzeugs eine ebene Oberfläche 32 auf, die zusammen mit der Drehachse 31 ein erstes Koordinatensystem definiert, dessen Ursprung durch den Schnittpunkt der Oberfläche 32 des Drehtellers 3 mit der Drehachse 31 gebildet wird und dessen räumliche Achse (z-Achse) mit der Drehachse 31 zusammenfällt. Die Drehachse 31 verläuft dabei vertikal.

Auf dem Drehteller ist ein Fahrzeug 1 angeordnet, das in üblicher Weise zwei Front-Scheinwerfer 2 aufweist, die jeweils im Hinblick auf eine lichttechnische oder radiometrische Kenngröße gonioradiometrisch zu vermessen sind. Das Fahrzeug 1 ist dabei im Wesentlichen mittig auf dem Drehteller 3 angeordnet, so dass die Scheinwerfer 2 vom Ursprung des wie erläutert gebildeten ersten Koordinatensystems und von der Drehachse 31 beabstandet sind.

Zur Vornahme einer gonioradiometrischen Messung ist des Weiteren ein sich vertikal erstreckender Mast 40 vorgesehen, an dem ein Sensor 4 vertikal zwischen verschiedenen Höhenpositionen S verfahren werden kann. Der Mast 40 erstreckt sich ausgehend von der Bodenebene, die gegenüber der Ebene des Drehtellers 3 tiefer liegt, so dass auch vom Front-Scheinwerfer 2 nach unten abgestrahlte Strahlung erfasst werden kann.

Weiter ist eine Messwand 5 dargestellt, die das ausgestrahlte Scheinwerferlicht diffus reflektiert. Im betrachteten Ausführungsbeispiel ist die Messwand 5 im Hinblick auf die durchzuführende gonioradiometrischen Messung nicht von Relevanz, kann aber zur Visualisierung der Scheinwerfer-Ausrichtung und zur visuellen Prüfung der durch den Scheinwerfer erzeugten Beleuchtungsverteilung herangezogen werden. Der kürzeste Abstand zwischen der Drehachse 31 und der Messwand 5 ist mit r bezeichnet.

Sowohl der Mast 40 mit dem Sensor 4 als auch die Messwand 5 befinden sich im Fernfeld der Scheinwerfer des Fahrzeugs 1, wobei als Abstand beispielsweise ein Abstand von 25 m gewählt ist.

Das durch den dargestellten Aufbau bereitgestellte Gonioradiometer ist ein Gonioradiometer des Typs 3, bei dem eine Rotation um eine Drehachse, hier die Drehachse 31 des Drehtellers 3, mit dem Verfahren eines Sensors, hier des Sensors 4, entlang einer geraden, vertikalen Linie kombiniert wird. Die Messung erfolgt dabei dahingehend, dass für eine bestimmte Drehwinkelstellung des Drehtellers 3 der Sensor 4 vertikal verfahren wird und dabei eine Vielzahl von Messwerten aufnimmt, die verschiedenen Höhenpositionen S entsprechen. Dies wird für eine Vielzahl von Drehwinkelstellungen des Drehtellers 3 wiederholt. Alternativ wird der Drehteller 3 in einer betrachteten Höhenpositionen S des Sensors 4 in verschiedene Drehtellerstellungen verfahren und dies für verschiedene Höhenpositionen S wiederholt.

Während einer Messung ist stets nur eine Strahlungsquelle aktiv, im dargestellten Ausführungsbeispiel der linke Scheinwerfer.

Bei den Sensoren 4 kann es sich grundsätzlich um beliebige Sensoren handeln, die geeignet sind, optische Strahlung im Wellenlängenbereich von 100 nm bis 1 μm oder in einem Teilbereich dieses Wellenlängenbereiches zu messen. Beispielsweise handelt es sich um Photometer. Es kann vorgesehen sein, dass die Sensoren 1 eine Partial- oder Vollfilterung vornehmen, durch die die Empfindlichkeit des Sensors der Empfindlichkeitskurve des Normauges nachgebildet wird. Die Sensoren 4 geben beispielsweise Helligkeitswerte als Ausgangswerte aus.

Der Sensor 4 wird entlang des Mastes 40 beispielsweise in Höhenpositionen S verfahren, die einen vertikalen Abstand zueinander aufweisen, der einem Winkelmaß von 0,05°, 0,1°, 0,15°, oder 0,2° entspricht. Dieses ist jedoch nur beispielhaft zu verstehen.

Bei einer auf diese Weise durchgeführten gonioradiometrischen Messung verhält es sich allerdings so, dass das richtungsabhängige Erfassen der zu messenden Kenngröße der Strahlungsquelle (des Scheinwerfers) für eine Vielzahl von Ausstrahlungsrichtungen im ersten Koordinatensystem erfolgt. Die durch die Messung ermittelte räumliche Verteilung der Beleuchtungsstärke oder einer anderen Kenngröße lässt daher keine Aussage über die räumliche Verteilung der betrachteten Kenngröße für die Strahlungsquelle zu.

Um die räumliche Verteilung der betrachteten Kenngröße für die Strahlungsquelle zu ermitteln, wird die betrachtete Kenngröße unter Berücksichtigung zum einen der Position des Strahlungsschwerpunkts der optischen Strahlungsquelle relativ zum Ursprung des ersten Koordinatensystems und unter Berücksichtigung zum anderen der im ersten Koordinatensystem richtungsabhängig erfassten Werten der Kenngröße in ein zweites Koordinatensystem umgerechnet, in dem der Strahlungsschwerpunkt der optischen Strahlungsquelle im Ursprung des Koordinatensystems liegt.

Es wird darauf hingewiesen, dass in der folgenden Figurenbeschreibung der Einfachheit halber die Begriffe "Messgröße" und "Kenngröße" als Synonyme verwendet werden. Dabei ist die Messgröße der von einem Sensor gemessen Messwert. Die Kenngröße kann mit der Messgröße identisch sein, oder aus der Messgröße abgeleitet werden. Sofern beispielsweise die Messgröße die Beleuchtungsstärke ist, wird die Lichtstärke als Kenngröße der Strahlungsquelle aus der Beleuchtungsstärke über eine Abstandskorrektur berechnet, die berücksichtigt, dass die Sensorfläche des Sensors bzw. Photometers bei schrägem Lichteinfall mit reduzierter Intensität von Licht beaufschlagt wird, und die des Weiteren die Entfernung zwischen der Strahlungsquelle und dem Sensor berücksichtigt.

Die genaue Position des Strahlungsschwerpunkt der optischen Strahlungsquelle relativ zum Ursprung des ersten Koordinatensystems kann beispielsweise über ein taktiles Messsystem erfolgen, das bestimmte Markierungen am Fahrzeug antastet und hieraus relative Positionen berechnet. Ein solches taktiles Messsystem wird beispielsweise von der Firma Hexagon Metrology unter der Bezeichnung "ROMER ABSOLUTE ARM" hergestellt und vertrieben. Hierbei wird zusätzlich angemerkt, dass der Strahlungsschwerpunkt eines in ein Fahrzeug eingebauten Scheinwerfers typischer-

**EP 4 251 960 B1**

weise bereits herstellerseitig durch eine Markierung angegeben ist, die in die Abschlussscheibe des Scheinwerfers integriert ist und die den geometrischen Schwerpunkt eines Strahlungsbündels angibt, das durch die Abschlussscheibe austritt. Beispielsweise auf diese Weise kann die exakte Position des Strahlungsschwerpunkt relativ zum Ursprung des ersten Koordinatensystems exakt erfasst werden.

Die Umrechnung der Kenngröße für die Vielzahl von Ausstrahlungsrichtungen in entsprechende Werte im zweiten Koordinatensystem erfolgt durch eine Abbildung bzw. Koordinatentransformation. Hierzu wird nachfolgend anhand der Figuren 2-5 eine Ausführungsvariante beschrieben, bei der eine solche Koordinatentransformation erfolgt, indem die erfassten Werte im ersten Koordinatensystem als Zylinderkoordinaten erfasst werden, die erfassten Werte in einem ersten Schritt auf ein weiteres zylindrisches Koordinatensystem umgerechnet werden, in dessen Ursprung der Strahlungsschwerpunkt der Strahlungsquelle liegt, und in einem zweiten Schritt unter Berücksichtigung der Entfernung in ein Kugel-Koordinatensystem umgerechnet werden, in dessen Ursprung der Strahlungsschwerpunkt der Strahlungsquelle liegt, wobei das Kugel-Koordinatensystem das gewünschte zweite Koordinatensystem ist.

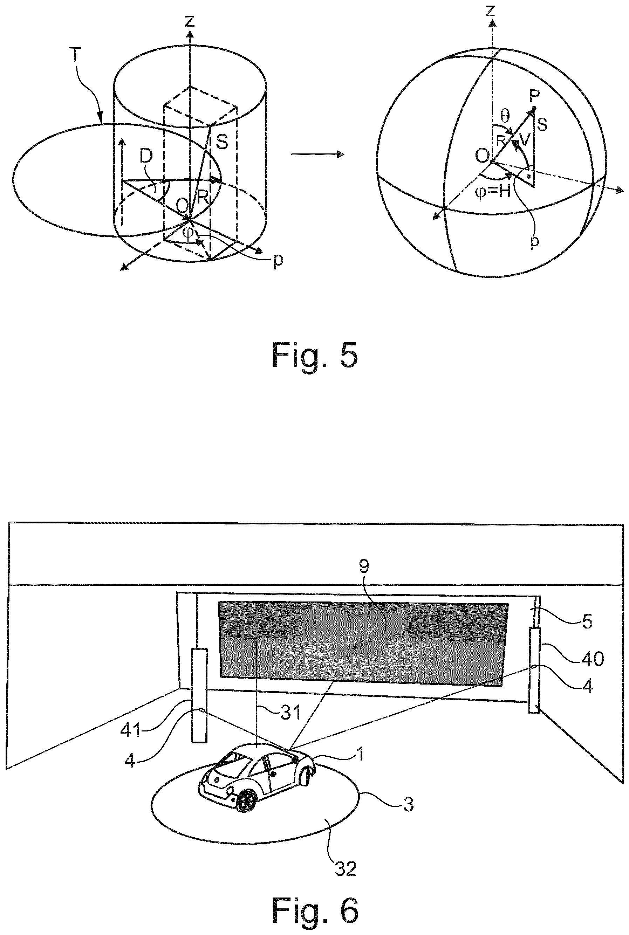

Die Figuren 2 und 5 verdeutlichen diese Vorgehensweise. Die Figur 2 zeigt ein Zylinder-Koordinatensystemen, dessen Ursprung sich auf einem Kreisboden bewegt. Die Trajektorie des mitbewegten Zylinder-Koordinatensystems ist mit T angegeben. Der Trajektorie D entspricht die Bewegung eines betrachteten Scheinwerfers des Fahrzeugs 1 auf dem Drehteller 3. Der Drehteller 3 bzw. der Scheinwerfer wird dabei von einer Ausgangsstellung A1 um den Winkel D gedreht. In der Darstellung der Figur 2 ist der Scheinwerfer in die Stellung A2 gedreht worden. Die Figur 2 zeigt die üblichen Parameter eines Zylinder-Koordinatensystems. Die Höhe S gibt dabei die Höhenposition des Sensors 4 gemäß der Figur 1 an. Im Zylinder-Koordinatensystem ist die ebene Entfernung vom Scheinwerfer zum Sensor 4 mit p angegeben.

Es wird darauf hingewiesen, dass das Zylinder-Koordinatensystem der Figur 2 das erwähnte Zwischen-Koordinatensystem darstellt. Die Messwerte werden zunächst erfasst im ersten Koordinatensystem, das durch den Ursprung 0 geht und sich um die Drehachse 31 dreht, wobei das erste Koordinatensystem ebenfalls ein Zylinder-Koordinatensystem ist. Es geht nun darum, die Messwerte in einem ersten Schritt in das Zwischen-Koordinatensystem mit den Parametern $\varphi$, p und S (wobei p und S auch gemessen werden können) ausgehend von dem Drehwinkel D umzurechnen und in einem zweiten Schritt aus den Parametern $\varphi$, p und S die Parameter H und V zu berechnen, wobei der Parameter H gemäß der rechten Darstellung der Figur 5 den Azimutwinkel und der Parameter V den Höhenwinkel (definiert als 90° minus dem Polarwinkel $\theta$) im Kugel-Koordinatensystem angeben. Damit ist dann die zu bestimmende räumliche Verteilung der zu erfassenden Kenngröße in Bezug auf ein Kugel-Koordinatensystem erfasst, in dem der Strahlungsschwerpunkt der Strahlungsquelle im Koordinatenursprung liegt.

Zu jedem Drehwinkel D gehört also ein lokales Zylinder-Koordinatensystem, für welches der lokale Azimut-Winkel $\varphi$ bestimmt wird (=H im Ebenensystem A,$\alpha$), bevor aus der Höhe S und dem lokalen Radius p der lokalen Höhenwinkel V = 90°-$\theta$ im Objektsystem des Scheinwerfers berechnet wird und anschließend eine Abstandskorrektur entsprechend der gewünschte Kenngröße, z.B. der Lichtstärke, erfolgt.

Die gonioradiometrischen Berechnungen erfolgen beispielsweise über eine in der Figur 1 schematisch dargestellte Recheneinheit 6 zum Berechnen der Kenngröße für die Vielzahl von Ausstrahlungsrichtungen im zweiten Koordinatensystem. Die Recheneinheit 6 erfasst den Drehwinkel des Drehtellers 3, die Höhe S des Sensors 4 und hat Kenntnis von den vorgegebenen Abständen im Messsystem. Auch die von dem Sensor 4 gemessenen Messwerte werden der Recheneinheit 6 zugeführt. Gleichzeitig kann die Recheneinheit Steuerbefehle bereitstellen, beispielsweise zum Drehen des Drehtellers 3 um einen bestimmten Winkel D oder zum Verfahren des Sensors 4 in eine bestimmte Höhe S.

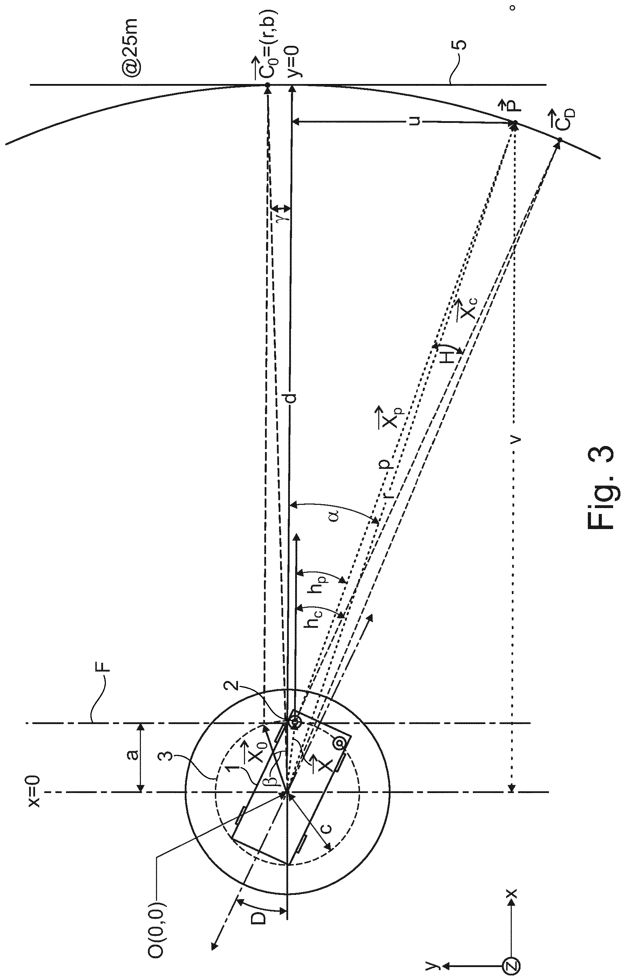

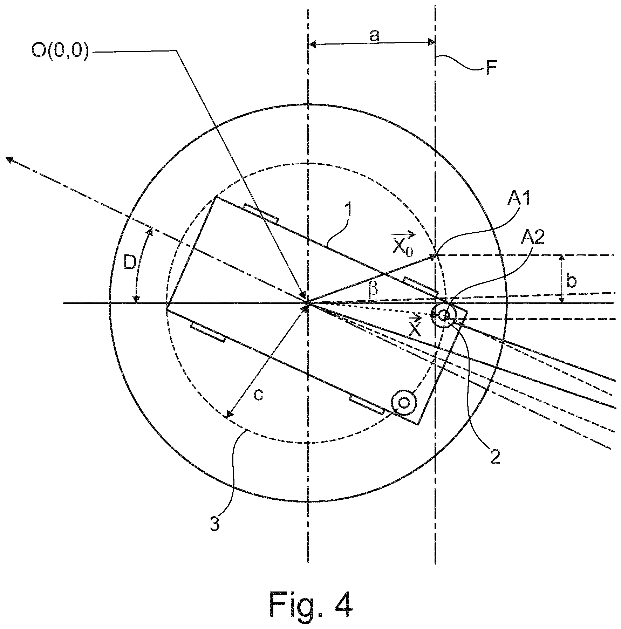

Die Berechnung wird nachfolgend im Einzelnen beispielhaft anhand der Figuren 3 und 4 beschrieben, wobei die Figur 4 eine vergrößerte Darstellung des linken Teilbereichs der Figur 3 ist.

Messgeometrie

Die Messgeometrie in den Figuren 3 und 4 ist wie folgt. Der Ursprung O=(0,0) des Koordinatensystems ist der Schnittpunkt zwischen der Achse 31 des Drehtellers 3 und der Oberfläche 32 des Drehtellers 3. Der Winkel zwischen dem Drehteller 3 und der X-Achse ist gleich D. Die X-Achse zeigt nach recht zum Schirm, die positive Y-Achse im positiven Drehsinn in der Zeichenebene nach oben (kanonisch, d.h. das Licht kommt von links) und die Z-Achse zeigt aus der Blattebene nach oben.

Die Scheinwerfer 2 liegen in der Ausgangsposition A1 auf einer Referenzlinie F mit festem Abstand a zum Drehzentrum. Deren Position im Raum muss jedoch im Messbetrieb bestimmt werden, um daraus die Null-Position des Fahrzeugs 1 zu finden. Der laterale Abstand der Scheinwerfer zur Mittelebene des Fahrzeugs 1 ist b, wobei die Mittelebene des Fahrzeugs 1 innerhalb der Fertigungstoleranzen und Positioniergenauigkeit entlang der X-Achse verläuft.

Die Berechnung erfolgt durch die Anwendung von 2-dimensionalen Drehmatrizen und analytischer Geometrie in der Ebene. Für die grundlegenden Betrachtungen wird die Drehung eines Punktes P (x,y) in $R^2$ um D benötigt:

$$\begin{pmatrix} x \\ y \end{pmatrix} = \begin{pmatrix} \cos D & -\sin D \\ \sin D & \cos D \end{pmatrix} \cdot \begin{pmatrix} a \\ b \end{pmatrix}$$

Alle wichtigen Punkte werden in der (x,y)-Ebene aus der Nullstellung heraus gedreht und anschließend werden die entsprechenden Vektoren, welche am Scheinwerfer 2 als Strahlungsquelle aufgehängt sind, berechnet.

Die Messung und Berechnung der Kenngröße erfolgt für die beiden Scheinwerfer des Fahrzeug 1 konsekutiv, d. h. bei Messung des einen Scheinwerfers 2 ist der andere Scheinwerfer ausgeschaltet oder abgedeckt und umgekehrt. Das Ausführungsbeispiel betrachtet den linken Scheinwerfer 2.

Berechnung von H und p aus D

Zunächst sind der Azimut-Winkel $\varphi$ (bzw. H) und der lokale Radius p im lokalen Zylinder-Koordinatensystem aus dem Drehwinkel D zu bestimmen, wobei der lokale Radius p der Abstand zwischen dem Scheinwerfer 2 und dem Fußpunkt der Position des Sensors 4 in der betrachteten Ebene ist.

Die Geometrie ist wie folgt:

| | | |
|---|---|---|
| Winkel des Drehtellers | $D$ | z.B. 20.00° |
| Abstand Referenzlinie F-Drehzentrum (= Position Scheinw.) | $a$ | wird gemessen, z.B. 2,750 m |
| Abstand Referenzlinie F-Schirm | $d$ | z.B. 25,000 m |
| Abstand Drehzentrum O-Schirm | $r = d + a$ | z.B. 27,750 m |
| Lateraler Scheinwerfer-Abstand | $b$ | (wird gemessen) |
| Abstand des Scheinwerfers vom Drehzentrum O | $c$ | ($c^2 = a^2 + b^2$) |

Die Parameter zum aktiven Scheinwerfer sind wie folgt:

| | |
|---|---|
| Koordinaten des aktiven Scheinwerfers für H=0 | $\vec{X}_0 = \begin{pmatrix} a \\ b \end{pmatrix}$ |
| Winkel des Vektors zum Scheinwerfer gegen die optische Achse (H=0) (braucht man aber im Weiteren nicht mehr) | $\beta = \arctan\left(\frac{b}{a}\right)$ |
| Position $\vec{X}$ des aktiven Scheinwerfers nach Drehung um D | $\vec{X} = \begin{pmatrix} x \\ y \end{pmatrix} = \begin{pmatrix} a\cos D - b\sin D \\ a\sin D + b\cos D \end{pmatrix}$ |

Die Parameter zur Photometer-Position sind wie folgt:

| | | |
|---|---|---|
| Lateraler Photometer-Abstand zur optischen Achse (x), der sich aus der Raumgeometrie bestimmt | $u$ | |
| Photometer-Abstand vom Zentrum (y) in XY-Richtung | $v$ | $v = \sqrt{r^2 - u^2}$ |
| Photometer Offsetwinkel | $\alpha$ | $\alpha = \arcsin\frac{u}{r}$ |
| Koordinaten des Photometers | | $\vec{P} = \begin{pmatrix} \sqrt{r^2 - u^2} \\ u \end{pmatrix}$ |

Der Messabstand ist wie folgt:

| | |
|---|---|
| Der Vektor $\overrightarrow{X_p}$ zeigt vom aktiven Scheinwerfer zum Photometer: | $\vec{P} - \vec{X} = \overrightarrow{X_p} = \begin{pmatrix} x_p \\ y_p \end{pmatrix} = \begin{pmatrix} v - x \\ u - y \end{pmatrix}$ |
| Der Abstand $p$ zum Photometer ist die Länge dieses Vektors und damit die zu D gehörende Messentfernung | $p = \|\overrightarrow{X_p}\| = \sqrt{x_p^2 + y_p^2}$ |

(fortgesetzt)

Der Scheinwerfer sieht das Photometer unter dem Winkel $h_p$ zur optischen Achse

$$h_p = \arctan\left(\frac{y_p}{x_p}\right)$$

Der Fluchtpunkt oder die optische Achse des aktiven Scheinwerfers wird ebenfalls gedreht. Im nicht gedrehten Zustand (D=0) zielt der Scheinwerfer auf $\overrightarrow{C_0} = \begin{pmatrix} r \\ b \end{pmatrix}$.

Ausgehend von einer solchen Geometrie und Parametern können der Azimut-Winkel φ (bzw. H) und der lokale Radius p im lokalen Zylinder-Koordinatensystem wie folgt berechnet werden.

Bei Drehung um D wird $\overrightarrow{C_0}$ in den Punkt $\overrightarrow{C_D}$ gedreht. Rechnerisch geschieht dies wie für $\vec{X}_0$ durch die gleiche Matrix

$$\overrightarrow{C_D} = \begin{pmatrix} C_x \\ C_y \end{pmatrix} = \begin{pmatrix} \cos D & -\sin D \\ \sin D & \cos D \end{pmatrix} \begin{pmatrix} r \\ b \end{pmatrix} = \begin{pmatrix} r\cos D - b\sin D \\ r\sin D + b\cos D \end{pmatrix}$$

Der Vektor $\overrightarrow{X_c}$ zeigt vom aktiven Scheinwerfer in Richtung des neuen Fluchtpunktes $\overrightarrow{C_D}$.

$$\vec{C}_D - \vec{X} = \overrightarrow{X_C} = \begin{pmatrix} x_c \\ y_c \end{pmatrix}$$

$\overrightarrow{X_c}$ hat gegenüber der optischen Achse den Winkel $h_c$. $h_c$ ist identisch mit *D.*

$$h_c = \arctan\left(\frac{y_c}{x_c}\right)$$

Der Winkel des Scheinwerfers in Bezug auf das Photometer ist somit

$$H = h_C - h_p = D - \arctan\left(\frac{y_p}{x_p}\right)$$

$$H = D - \arctan\left(\frac{u - a\sin D - b\cos D}{v - a\cos D + b\sin D}\right)$$

Damit ist H im lokalen Zylinder-Koordinatensystem (Fig. 2) bestimmt.

Der lokale Radius p ist gleich:

$$p = \left|\overrightarrow{X_p}\right| = \sqrt{x_p^2 + y_p^2}$$

$$\text{bzw. } p = \sqrt{(v - a\cos D + b\sin D)^2 + (u - a\sin D - b\cos D)^2}$$

Der lokale Radius p braucht nicht notwendigerweise berechnet zu werden, da er bei der betrachteten Messgeometrie per definitionem mit d übereinstimmt und somit im betrachteten Beispiel bei 25 m liegt.

In ähnlicher Weise kann umgekehrt D aus H bestimmt werden. Dies ist beispielsweise dann von praktischer Bedeutung, wenn ein bestimmter Winkel H angefahren werden soll.

Im nächsten Schritt sind nun die Kugelkoordinaten H und V im Kugel-Koordinatensystem gemäß Figur 5, rechte Abbildung zu bestimmen.

Der Azimutwinkel H ist dabei der gleiche wie im lokalen Zylinder-Koordinatensystem:

$$H = D - \arctan\left(\frac{u - a\sin D - b\cos D}{v - a\cos D + b\sin D}\right)$$

Der Winkel V ergibt sich aus der Beziehung zwischen S und V unter Verwendung von p und D:

$$V = \arctan\frac{S}{p} \quad , \text{bzw.} \quad S = p \tan V$$

mit

$$p = \left|\overrightarrow{X_p}\right| = \sqrt{x_p^2 + y_p^2}$$

$$\text{bzw.} \ p = \sqrt{(v - a\cos D + b\sin D)^2 + (u - a\sin D - b\cos D)^2}$$

Falls *D* und S gegeben sind, kann also V relativ einfach bestimmt werden.

Schließlich kann auch der Radius R im Kugel-Koordinatensystem beispielsweise aus V und S berechnet werden:

$$R = \frac{S}{\cos(90° - V)}.$$

Damit kann die räumliche Verteilung der zu messenden Kenngröße, beispielsweise der Lichtstärke, im dem Kugel-Koordinatensystem angegeben werden, in dem der Strahlungsschwerpunkt der Strahlungsquelle im Zentrum liegt. Zusätzlich kann eine Abstandskorrektur erfolgen. Eine weitergehende Analyse der Gleichungen zeigt, dass es sich im betrachteten Definitions- bzw. Wertebereich um eine bijektive Abbildung handelt.

Die Figur 6 zeigt ein weiteres Ausführungsbeispiel, das auf dem Ausführungsbeispiel der Figur 1 basiert. Dabei ist zusätzlich ein zweiter Mast 41 mit einem zweiten Sensor 4 vorgesehen, der ebenfalls in vertikaler Richtung entlang des Mastes 41 in verschiedene Höhenpositionen verfahrbar ist. Dabei ist der zweite Mast 41 näher als der erste Mast 40 zum Drehteller 3 angeordnet, beispielsweise in einer Entfernung von 5 m, während die Entfernung zum ersten Mast bei 25 m liegt. Die Anordnung gemäß der Figur 6 umfasst ebenso wie die Figur 1 eine Recheneinheit, die jedoch nicht gesondert dargestellt ist.

Eine solche Anordnung erlaubt es, mehrere Strahlungsquellen gleichzeitig gonioradiometrisch auszumessen, wobei beispielsweise der näher angeordnete Sensor 4 dazu verwendet wird, Signalleuchten wie zum Beispiel einen Fahrtrichtungsanzeiger optimal am Fahrzeug zu messen. Bei Signalleuchten liegt das Fernfeld bereits in einer Entfernung von 5 m vor, so dass bei gleicher Raumhöhe größere vertikale Winkel gemessen werden können.

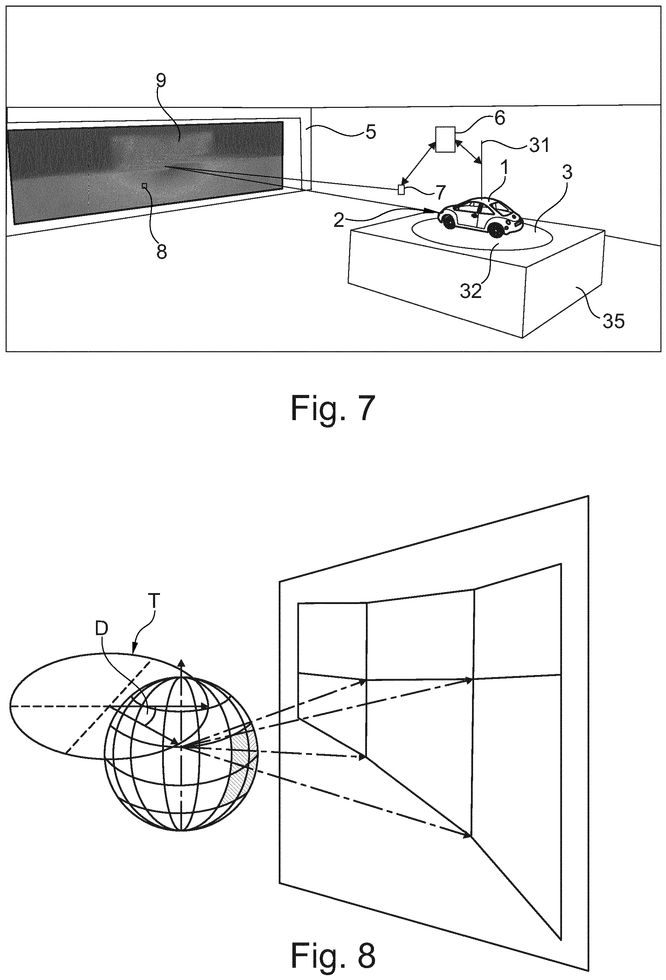

Die Figur 7 zeigt ein Ausführungsbeispiel, bei dem für eine gonioradiometrische Messung ein auf dem Drehteller 3 angeordnetes Fahrzeug 1 in mindestens zwei Drehpositionen gedreht und das auf der Messwand 5 reflektierte Licht von einer stationär angeordneten, schematisch dargestellten Kamera 7 erfasst wird.

Die Kamera 7 umfasst dabei einen 2-dimensionalen Sensor-Chip, wobei die Pixel des Sensor-Chips als Sensoren im Sinne der vorliegenden Erfindung aufgefasst werden können. Dabei ist jedem Pixel des 2-dimensionalen Sensor-Chips ein Wandelement der Messwand 5 zugeordnet. Der Sensor-Chip ist beispielsweise ein 2-dimensionaler CCD-Sensor oder CMOS-Sensor. Die Kamera 7 weist eine Optik auf, die das einfallende Licht auf den Sensor-Chip richtet.

Die Messwand 5 ist derart ausgebildet, dass sie die einfallende Strahlung mit diffuser, ungerichteter Reflexion in alle Richtungen gleichmäßig streuend reflektiert. Sie ist insbesondere grau oder weiß, um spektrale Einflüsse der Reflektion möglichst klein zu halten. Die Messwand 5 stellt somit keinen Spiegel dar, der eine das Reflexionsgesetz erfüllende gerichtete Reflexion aufweist.

Die Kamera 7 ist derart angeordnet und dazu ausgebildet, dass sie an der Messwand 5 reflektiertes Licht erfasst, wobei das reflektierte Licht auf den Sensor-Chip der Kamera 7 abgebildet wird. Das reflektierte Licht wird von der Kamera 7 als Leuchtdichte-Verteilung auf der Messwand 5 für mindestens zwei Stellungen des Drehtellers 3 erfasst. Eine zugeordnete, lediglich schematisch dargestellte Recheneinheit 6 ist dazu ausgebildet, die von der Kamera 7 erfasste Verteilung der Leuchtdichte mithilfe einer Koordinatentransformation in eine Leuchtdichte-Verteilung im zweiten Koordinatensystem umzurechnen.

Die Recheneinheit 6 nimmt dabei die gonioradiometrischen Berechnungen vor. Sie erfasst den Drehwinkel D des Drehtellers 3 und die Messdaten der Kamera 7. Gleichzeitig kann die Recheneinheit Steuerbefehle bereitstellen, beispielsweise zum Drehen des Drehtellers 3 um einen bestimmten Winkel.

Die Strahlungsquelle 2 erzeugt auf der Messwand 5 eine Lichtverteilung 9, die im dargestellten Ausführungsbeispiel der typischen Lichtverteilung eines Auto-Scheinwerfers entspricht. Die Lichtverteilung 9 wird über den Sensor-Chip der Kamera 7 für jede Schwenkbewegung um die Achse 31 erfasst. Die Messwand 5 befindet sich im Fernfeld der Lichtverteilung der in das Fahrzeug eingebauten Strahlungsquelle. Sie befindet sich beispielsweise in einer Entfernung von 25 m vom Scheinwerfer bzw. der Strahlungsquelle.

Dieses Ausführungsbeispiel zeichnet sich somit dadurch aus, dass anstatt eines linear bewegten Photometers gemäß dem Ausführungsbeispiel der Figur 1 ein photometrisch korrigiertes Kamera-Messwand-System eingesetzt wird und eine Kamera die reflektierte Leuchtdichte der von einem Fahrzeug-Beleuchtungssystem auf einer Messwand hervorgerufenen Leuchtdichte bzw. Beleuchtungsstärke misst. In diesem Fall werden lediglich die Drehbewegung des Fahrzeugs und das Kamera-Messwand-Messsystem benötigt, mit dem ganze Winkelbereiche in einem einzigen Leuchtdichtebild erfassen werden können. Die von der Kamera auf der Wand gemessene Leuchtdichte-Verteilung wird anschließend mit Hilfe einer Koordinaten-Transformation in die Lichtstärkeverteilung des Scheinwerfers umgewandelt.

Auch hierbei werden gekoppelte Koordinatensysteme eingesetzt, d.h. die Transformation von den Wandkoordinaten, in denen die Leuchtdichtekamera die Messwerte ermittelt, in die Kugelkoordinaten im Bezugssystem des Scheinwerfers ändern sich mit der Drehung des Scheinwerfers im Raum. Wenn die Koordinaten des Scheinwerfers abhängig vom Winkel der Drehvorrichtung bekannt sind, lässt sich wiederum eine bijektive Abbildung finden, mit der aus dem Winkel der Drehvorrichtung und der Höhe des Scheinwerfers die Lichtverteilung im Bezugssystem des Prüfobjektes berechnen werden kann.

Mehrere Teilwinkelbereiche können dann zur gesamten Winkelverteilung zusammengefasst werden. Der Vorteil eines solchen Verfahrens ist, dass die Daten mit einer Kombination aus Fahrzeug-Drehung und Kamera-Messung schneller gewonnen werden als dies mit der sequenziellen Raster-Messung basierend auf einem Photometer möglich wäre.

Die Dynamik der Messung bei indirekter Vermessung mittels einer Kamera 7 ist im Vergleich zu einer direkten Vermessung mit Photometern allerdings kleiner. Dies hängt damit zusammen, dass die Streulicht-Unterdrückung sowohl im Messraum wie auch im Objektiv bei Verwendung einer Kamera 7 begrenzt ist. Daher kann ein Kontrast von mehr als 100:1 nur mit sehr großem Aufwand erreicht werden. Dies berücksichtigend, kann vorgesehen sein, ausgezeichnete Punkte der Lichtverteilung mit einem fest angebrachten Sensor 8 mit höherer Dynamik nachzumessen. In der Figur 7 ist ein solcher weiterer Sensor 8 schematisch dargestellt. Eine Ausführungsvariante hierzu sieht vor, dass in der Messwand 5, beispielsweise auf der optischen Achse der Strahlungsquelle eine Öffnung (nicht dargestellt) ausgebildet ist, durch die von der Strahlungsquelle ausgesandtes Licht hindurchtritt und durch den zusätzlichen Sensor detektiert wird. Der zusätzliche Sensor befindet sich dabei auf der Achse entweder hinter der Messwand 5 oder in der Öffnung. Im Idealfall ist die Sensorfläche ein Teil der Messwand und weist ein ähnliches Reflektions- bzw. Streuverhalten in Bezug auf das einfallende Licht auf. Alternativ ist ein solcher Sensor 8 vor oder neben der Messwand 5 angeordnet, wobei er sich im Fernfeld befindet. Auch kann vorgesehen sein, dass ein solcher Sensor 8 verfahrbar ist und somit eine Vielzahl von Positionen vor der Messwand 5 ansteuern kann.

Über einen solchen Sensor 8 kann der komplette von der Messwand erfasste Bereich der Lichtverteilung exakt kalibriert werden. Da die Position eines solchen zusätzlichen Sensors 8 bekannt ist, braucht die Kombination von Messwand 5 und Kamera 7 lediglich zur Winkelbestimmung ausgezeichneter Punkte einer Lichtverteilung herangezogen werden. Dies ist mit Vorteilen bei der Rückführbarkeit der Messwerte verbunden, da die Kombination von Messwand 5 und Kamera 7 nicht absolut kalibriert werden muss, sondern während einer Messung mit dem Photometer kalibriert werden kann.

Wie bereits angemerkt, erfasst die Kamera 7 bei jeder Drehstellung des Drehtellers 3 den durch die Messwand 5 definierten Raumwinkel. Durch ein Aneinanderreihen der einzelnen Raumwinkel bei unterschiedlichen Drehstellungen des Drehtellers 3 kann die gesamte Lichtverteilung über einen betrachteten größeren Raumwinkelbereich zusammengesetzt werden, und zwar im Koordinatensystem, in dem die Strahlungsquelle bzw. der Scheinwerfer sich im Koordinatenursprung befindet. Die entsprechende Abbildung zeigt die Figur 8.

Ein weiteres alternatives Ausführungsbeispiel sieht vor, dass der Drehteller 3 der Figur 1 zusätzlich um eine Achse senkrecht zur Drehachse 31, z.B. um die Y-Achse gekippt werden kann. Der Drehteller 3 selbst realisiert somit eine Bewegung der Strahlungsquelle während eines Messvorgangs um eine erste Achse 31 und um eine senkrecht auf der ersten Achse 31 stehende zweite Achse, wobei natürlich nicht sämtliche Raumrichtungen einer Kugel, sondern nur ein nach vorne gerichteter Raumwinkel gonioradiometrisch erfasst werden kann. Dies reicht für die Anwendung der Vermessung der Scheinwerferbeleuchtung jedoch aus.

Alternativ kann auch das Fahrzeug auf dem Drehteller um eine Querachse, z.B. durch Anheben der Front oder des Hecks, gekippt werden, womit man den gleichen Effekt wie durch das Kippen des Drehtellers erzielt.

Bei dieser Ausgestaltung ist es ausreichend, für die gonioradiometrischen Messung einen ortsfesten Sensor einzusetzen, der für jede Kombination von Rotationswinkel und Neigungswinkel einen Messwert zur ausgestrahlten Strahlung aufnimmt, der gleich der zu bestimmenden Kenngröße ist oder aus der die zu bestimmende Kenngröße abgeleitet wird. Die Verwendung eines ortsfesten Sensors ist vorteilhaft, insbesondere wenn die Raumhöhe begrenzt ist.

Es kann vorgesehen sein, dass die Neigung der Karosserie, die der Neigung des Drehtellers entspricht, mit einem geeigneten Messsystem instantan erfasst wird.

Eine solche Anordnung hat den Vorteil, dass das Photometer nicht mehr auf einer Linearachse verfahren werden muss, um den Höhenwinkel im gekoppelten Zylinderkoordinatensystem einzustellen, sondern dies kann nun durch Neigung des Fahrzeugs nach vorn oder hinten erfolgen kann. Allerdings müssen die erwähnten Nachteile einer Fahrzeugneigung auf das Fahrwerk erfasst und korrigiert werden. Dies kann z.B. durch links und rechts vom Fahrzeug angebrachte Kameras geschehen, welche auf der Karoserie angebrachte Markierungspunkte vermessen und somit den realen Kippwinkel des Fahrzeugs im Vergleich zur horizontalen Nullposition erfassen, ohne dass Fahrwerkseinflüsse wie Einfederung oder Luftdruck der Reifen den vertikalen Winkel verfälschen können.

Die Messung erfolgt wie auch in der Figur 1 durch eine Drehung der Plattform 3, auf der das geneigte Fahrzeug 1 aufgestellt ist, so dass sich der Scheinwerfer auf einem Kreisbogen um den Mittelpunkt der Drehvorrichtung bewegt. Eine solche Messung kann für verschiedene Kippwinkel wiederholt werden.

Die Messgeometrie wird bei diesem Ausführungsbeispiel durch ein Kugel-Koordinatensystem beschrieben, dessen Ursprung sich auf einer Kugeloberfläche bewegt. Denn das Verkippen des Fahrzeugs 1 um zwei senkrecht aufeinander stehende Achsen auf dem Drehteller ergibt Messwerte auf einer Kugeloberfläche entsprechend dem inneren Kugel-Koordinatensystem der Figur 9, welches ein erstes Koordinatensystem darstellt. Die entsprechenden, für unterschiedliche Ausstrahlungsrichtungen ermittelten Messwerte müssen nun umgerechnet werden in die Koordinaten des zweiten, äußeren Koordinatensystems, in dem der Strahlungsschwerpunkt der Strahlungsquelle im Koordinatenursprung liegt. Die Umrechnung erfolgt über eine Koordinatentransformation zwischen zwei gekoppelten Kugel-Koordinatensystemen wobei der Absolutwert wie in der ersten Gleichung beschrieben zusätzlich über das Abstandsgesetz und die Einstrahlwinkel zum Photometer modifiziert wird.

Die beschriebene Erfindung ermöglicht es, die Beleuchtungseinrichtungen von Fahrzeugen im eingebauten Zustand messtechnisch im Labor objektiv zu beurteilen. Der Vorteil gegenüber Methoden, welche im Freien und/oder im Fahrbetrieb gewonnen werden, besteht darin, dass der Einfluss der Straße (Reflektion, Zustand trocken oder nass) sowie Resthelligkeit oder atmosphärische Einflüsse ausgeschlossen werden können. Die beschriebene Erfindung ermöglicht zum anderen, Lichtfunktionen, die bereits zu großen Baugruppen vormontiert sind, azentrisch auf einem Goniometer zu positionieren und die Messergebnisse mittels einer bijektiven, d.h. ein-eindeutig umkehrbaren Abbildung in das Bezugsystem des Prüflings zu transformieren.

Das erfindungsgemäße Verfahren mit einer azentrisch angeordneten Strahlungsquelle (welche die zu beurteilende Lichtfunktion bereitstellt) ermöglicht es, die zu bestimmende Kenngröße in einem Koordinatensystem zu erfassen, in dem der Strahlungsschwerpunkt der Strahlungsquelle sich im Koordinatenursprung befindet, obwohl die Strahlungsquelle azentrisch angeordnet ist. Ein Vorteil des Verfahrens besteht darin, dass die zu prüfende Strahlungsquelle nicht durch Verrücken des Fahrzeuges in den Koordinatenursprung des Goniometers geschoben werden muss. Daraus ergibt sich zum einen ein Raumvorteil, zum anderen wird sichergestellt, dass das zu prüfende Fahrzeug sich in einer definierten Lage bzw., falls der Drehtisch zusätzlich mit einem Rollenprüfstand kombiniert wird, sich in einem definierten Fahrzustand befindet.

Es wird darauf hingewiesen, dass die beschriebene Transformation der Koordinatensysteme bei azentrisch angeordneten Strahlungsquelle grundsätzlich bei jeder gonioradiometrischen Messung durchgeführt werden kann, auch bei Messanordnungen, die keinen Drehteller gemäß der Figur 1 verwenden und bei denen eine Baugruppe mit azentrisch in der Baugruppe angeordneter Strahlungsquelle in anderer Weise gonioradiometrisch vermessen wird, beispielsweise durch Drehung der Baugruppe um zwei senkrecht zueinander angeordnete Achsen, z.B. mittels eines Roboters.

**Patentansprüche**

1. Verfahren zur richtungsabhängigen Messung mindestens einer lichttechnischen oder radiometrischen Kenngröße einer in ein Objekt (1) eingebauten optischen Strahlungsquelle (2), wobei das Verfahren umfasst:

- Anordnen des Objekts (1) auf einem Drehteller (3), der eine Drehachse (31) aufweist, wobei die Drehachse (31) des Drehtellers (3) ein erstes Koordinatensystem definiert, dessen Ursprung (O) durch den Schnittpunkt der Oberfläche (32) des Drehtellers (3) mit der Drehachse (31) gebildet ist und dessen räumliche Achse mit der Drehachse (31) zusammenfällt,

- wobei das Objekt (1) derart auf dem Drehteller (3) angeordnet wird, dass der Strahlungsschwerpunkt der optischen Strahlungsquelle (2) vom Ursprung (O) des ersten Koordinatensystems und von der Drehachse (31) beabstandet ist,

- Bestimmen der Position des Strahlungsschwerpunkts der optischen Strahlungsquelle (2) relativ zum Ursprung (O) des ersten Koordinatensystems als Relativposition,

- Vornahme einer gonioradiometrischen Messung, die eine Drehung des Objekts (1) um eine Achse umfasst, wobei die gonioradiometrische Messung im ersten Koordinatensystem erfolgt und das Objekt (1) auf dem Drehteller (3) ausgehend von einer Ausgangsposition (A1) um die Drehachse (31) des Drehtellers (3) gedreht wird und die Drehachse (31) des Drehtellers (3) die Achse der gonioradiometrischen Messung darstellt,

- richtungsabhängiges Erfassen einer Messgröße der Strahlungsquelle (2) mittels der gonioradiometrischen Messung für eine Vielzahl von Ausstrahlungsrichtungen, wobei Ausstrahlungsrichtungen, die im ersten Koordinatensystem definiert sind, jeweils gemessene Werte der Messgröße zugeordnet werden,

- Berechnen der Messgröße für die Vielzahl von Ausstrahlungsrichtungen in einem zweiten Koordinatensystem, in dem der Strahlungsschwerpunkt der optischen Strahlungsquelle (2) im Ursprung des Koordinatensystem liegt, aus den richtungsabhängig erfassten Werten der Messgröße, die im ersten Koordinatensystem ermittelt wurden, und der Relativposition,

- wobei die Messgröße gleich der zu messenden Kenngröße ist oder die zu messenden Kenngröße aus der Messgröße berechnet wird.

2. Verfahren nach Anspruch 1, **dadurch gekennzeichnet, dass** das Objekt (1) ein Automobil oder eine Baugruppe ist, wobei die Strahlungsquelle (2) in das Automobil oder die Baugruppe eingebaut ist und das Automobil oder die Baugruppe auf dem Drehteller (3) derart angeordnet wird, dass der Strahlungsschwerpunkt der optischen Strahlungsquelle (2) vom Ursprung (O) des ersten Koordinatensystems beabstandet ist.

3. Verfahren nach Anspruch 1 oder 2, **dadurch gekennzeichnet, dass** die Berechnung der richtungsabhängigen Messgröße im zweiten Koordinatensystem aus den richtungsabhängig erfassten Werten der Messgröße im ersten Koordinatensystem dadurch erfolgt, dass die Koordinaten der im ersten Koordinatensystem erfassten Werte abgebildet werden auf entsprechende Koordinaten im zweiten Koordinatensystem.

4. Verfahren nach einem der vorangehenden Ansprüche, **dadurch gekennzeichnet, dass** die gonioradiometrische Messung zusätzlich zu der Rotation des Objekts (1) auf dem Drehteller (3) die Erfassung der Messgröße mittels einer oder mehrerer Sensoren (4) entlang einer geraden Linie abhängig von der Position (S) entlang dieser Linie umfasst.

5. Verfahren nach Anspruch 4, **dadurch gekennzeichnet, dass** als Messgröße die Beleuchtungsstärke gemessen und aus der Beleuchtungsstärke die Lichtstärke als die zu messende Kenngröße der Strahlungsquelle (2) mit der folgenden Formel berechnet wird:

$$I = \frac{E \cdot d^2}{\cos H \cdot \cos V}$$

wobei

I die Lichtstärke,
E die gemessene Beleuchtungsstärke,
d der Abstand zwischen Lichtquelle und Sensor, und
(H,V) die Winkel sind, unter denen ein parallel zur X-Achse fest ausgerichteter Sensor beleuchtet würde, wobei die X-Achse in einer Ebene senkrecht zur Drehachse (31) verläuft, d.h.
H entspricht dem Azimutwinkel $\varphi$, und
V entspricht 90° minus dem Polarwinkel $\theta$.

6. Verfahren nach Anspruch 4 oder 5, **dadurch gekennzeichnet, dass** das erste Koordinatensystem ein zylindrisches Koordinatensystem ist, die Koordinaten der im ersten Koordinatensystem erfassten Werte in einem ersten Schritt auf ein weiteres zylindrisches Koordinatensystem umgerechnet werden, in dessen Ursprung der Strahlungsschwerpunkt der Strahlungsquelle (2) liegt, und in einem zweiten Schritt auf ein Kugel-Koordinatensystem umgerechnet werden, in dessen Ursprung der Strahlungsschwerpunkt der Strahlungsquelle (2) liegt, wobei das Kugel-Koordinatensystem das zweite Koordinatensystem ist.

7. Verfahren nach Anspruch 6, **dadurch gekennzeichnet, dass** für jede Ausstrahlungsrichtung aus dem Drehwinkel (D) des Drehtellers (3) und der Höhe (S) des Sensors (4) im ersten Koordinatensystem der Azimutwinkel (H) und der Höhenwinkel (V) der Sensorposition (P) im zweiten Koordinatensystem berechnet wird und der von dem betrachteten Sensor (4) gemessene Wert der Messgröße dieser durch Azimutwinkel (H) und Höhenwinkel (V) definierten Ausstrahlungsrichtung zugeordnet wird, wobei er um die Entfernung und den Einstrahlwinkel zum Sensor (4) korrigiert wird, um aus der Messgröße die Kenngröße zu erhalten.

8. Verfahren nach einem der Ansprüche 1 bis 3, **dadurch gekennzeichnet, dass** die gonioradiometrische Messung zusätzlich zu der Rotation des Objekts (3) auf dem Drehteller (3) die Erfassung der Messgröße mittels einer ortsfest angeordneten Kamera (7) umfasst, wobei die von der Strahlungsquelle (2) ausgesandte Strahlung an einer reflektierenden Messwand (5) mit diffuser Reflexion reflektiert und von der Kamera (7) als Leuchtdichte-Verteilung auf der Messwand für mindestens zwei Stellungen des Drehtellers (3) erfasst und die von der Kamera (7) erfasste Leuchtdichte-Verteilung mithilfe einer Koordinatentransformation in eine Leuchtdichte-Verteilung im zweiten Koordinatensystem umgerechnet wird, wobei die Leuchtdichte-Verteilung die Messgröße darstellt.

9. Verfahren nach Anspruch 8, **dadurch gekennzeichnet, dass** zusätzlich ein weiterer Sensor (8) direkt beleuchtet und das von diesem Sensor (8) erfasste Signal für eine Kalibrierung der Kamera (7) eingesetzt wird.

10. Verfahren nach einem der Ansprüche 1 bis 3, **dadurch gekennzeichnet, dass** die gonioradiometrische Messung zusätzlich zu der Rotation des Objekts (1) auf dem Drehteller (3) ein Kippen des Drehtellers (3) oder Objekts (1) um eine Achse senkrecht zur Drehachse (31) vorsieht, wobei das Objekt (1) für eine Mehrzahl von Neigungswinkeln rotiert wird und für jede Kombination von Rotationswinkel und Neigungswinkel die Messgröße erfasst wird, wobei die Messgröße aufgrund der gonioradiometrischen Messung auf einer Kugeloberfläche um den Strahlungsschwerpunkt der Strahlungsquelle (2) erfasst wird.

11. Verfahren nach Anspruch 10, **dadurch gekennzeichnet, dass** für die gonioradiometrische Messung ein ortsfester Sensor eingesetzt wird, der für jede Kombination von Rotationswinkel und Neigungswinkel einen Messwert zur ausgestrahlten Strahlung aufnimmt.

12. Verfahren zur richtungsabhängigen Messung mindestens einer lichttechnischen oder radiometrischen Kenngröße einer in ein Objekt (1) eingebauten optischen Strahlungsquelle (2), wobei das Verfahren aufweist:

- Anordnen des Objekts (1) an oder auf einem Halteelement, dass dazu vorgesehen und ausgebildet ist, das Objekt (1) um eine erste Achse und um eine senkrecht auf der ersten Achse stehende zweite Achse zu drehen, wobei das Objekt (1) derart an dem Halteelement angeordnet wird, dass der Strahlungsschwerpunkt der optischen Strahlungsquelle (2) außerhalb des Ursprung (O) eines durch die erste Achse und die zweite Achse gebildeten ersten Koordinatensystems liegt,
- Bestimmen der Position des Strahlungsschwerpunkts der optischen Strahlungsquelle (2) relativ zum Ursprung (O) des ersten Koordinatensystems als Relativposition,
- Vornahme einer gonioradiometrischen Messung, die eine Drehung des Objekts (1) um beide Achsen umfasst, wobei die gonioradiometrische Messung in dem ersten Koordinatensystem erfolgt,
- richtungsabhängiges Erfassen einer Messgröße der Strahlungsquelle (2) mittels der gonioradiometrischen Messung für eine Vielzahl von Ausstrahlungsrichtungen, wobei Ausstrahlungsrichtungen, die im ersten Koordinatensystem definiert sind, jeweils gemessene Werte der Messgröße zugeordnet werden,
- Berechnen der richtungsabhängigen Messgröße für die Vielzahl von Ausstrahlungsrichtungen in einem zweiten Koordinatensystem, in dem der Strahlungsschwerpunkt der optischen Strahlungsquelle (2) im Koordinatenursprung liegt, aus den richtungsabhängig erfassten Werten der Messgröße, die im ersten Koordinatensystem ermittelt worden sind, und der Relativposition,
- wobei die Messgröße gleich der zu messenden Kenngröße ist oder die zu messenden Kenngröße aus der Messgröße berechnet wird.

13. Gonioradiometer zur richtungsabhängigen Messung mindestens einer lichttechnischen oder radiometrischen Kenngröße einer in ein Objekt (1) eingebauten optischen Strahlungsquelle (2), wobei das Gonioradiometer umfasst:

- einen Drehteller (3), der eine Drehachse (31) aufweist, wobei die Drehachse (31) des Drehtellers (3) ein erstes Koordinatensystem definiert, dessen Ursprung (O) durch den Schnittpunkt der Oberfläche des Drehtellers (3) mit der Drehachse (31) gebildet ist und dessen räumliche Achse mit der Drehachse (31) zusammenfällt, und wobei der Drehteller (3) dazu vorgesehen ist, das Objekt (1) derart aufzunehmen, dass der Strahlungsschwerpunkt der optischen Strahlungsquelle (2) vom Ursprung (O) des ersten Koordinatensystems und von der Drehachse (31) beabstandet ist,
- mindestens einen Sensor (4), der dazu ausgebildet und vorgesehen, eine Messgröße der Strahlungsquelle (2) zu messen,
- wobei der Drehteller (3) und der mindestens eine Sensor dazu ausgebildet sind, eine gonioradiometrische Messung im ersten Koordinatensystem durchzuführen, die eine Drehung des Objekts (1) um die Drehachse (31) des Drehtellers (3) umfasst, wobei die Messgröße mittels der gonioradiometrischen Messung für eine Vielzahl von Ausstrahlungsrichtungen richtungsabhängig erfasst wird, wobei Ausstrahlungsrichtungen, die im ersten Koordinatensystem definiert sind, jeweils gemessene Werte der Messgröße zugeordnet werden,

- eine Recheneinheit (6), die dazu vorgesehen und ausgebildet ist, für die Vielzahl von Ausstrahlungsrichtungen in einem zweiten Koordinatensystem, in dem der Strahlungsschwerpunkt der optischen Strahlungsquelle (2) im Ursprung des Koordinatensystem liegt, aus der Position des Strahlungsschwerpunkt der optischen Strahlungsquelle (2) relativ zum Ursprung des ersten Koordinatensystems und aus den richtungsabhängig erfassten Werten der Messgröße, die im ersten Koordinatensystem ermittelt wurden, die Messgröße zu berechnen,
- wobei die Recheneinheit (6) des Weiteren dazu vorgesehen und ausgebildet ist, aus der Messgröße die zu messenden Kenngröße zu berechnen, sofern nicht die Messgröße bereits die zu messende Kenngröße ist.

**14.** Gonioradiometer nach Anspruch 13, **dadurch gekennzeichnet, dass** das Gonioradiometer des Weiteren aufweist:

- eine reflektierende Messwand (5) mit diffuser Reflexion, die das von der Strahlungsquelle (2) ausgesandte Licht reflektiert,
- eine ortsfest und unbeweglich angeordnete Kamera (7) mit einem 2-dimensionalen Sensor-Chip, wobei die Pixel des Sensor-Chips den mindestens einen Sensor bilden,
- wobei die Kamera (7) derart angeordnet und dazu ausgebildet ist, dass sie an der Messwand (5) reflektiertes Licht für mindestens zwei Stellungen des Drehtellers (3) erfasst, wobei das reflektierte Licht auf den Sensor-Chip der Kamera (7) abgebildet wird und wobei das reflektierte Licht von der Kamera (7) als Leuchtdichte-Verteilung auf der Messwand (5) erfasst wird,
- wobei die Recheneinheit (6) dazu ausgebildet ist, die von der Kamera (7) erfasste Verteilung der Leuchtdichte mithilfe einer Koordinatentransformation in eine Leuchtdichte-Verteilung im zweiten Koordinatensystem umzurechnen.

**15.** Gonioradiometer nach Anspruch 13, **dadurch gekennzeichnet, dass**

- der mindestens eine Sensor einen ortsfesten Sensor umfasst,
- der Drehteller (3) dazu ausgebildet ist, ein auf ihm angeordnetes Objekt (1) zusätzlich zu einer Rotation um die Drehachse (31) um eine Achse senkrecht zur Drehachse (31) zu kippen, oder das Objekt (1) um eine solche Achse kippbar angeordnet ist,
- wobei der Drehteller (3) bzw. das Objekt (1) und der mindestens eine Sensor bei einer gonioradiometrischen Messung derart zusammenwirken, dass das Objekt (1) bei der gonioradiometrischen Messung für eine Mehrzahl von Neigungswinkeln rotiert wird und der ortsfeste Sensor für jede Kombination von Rotationswinkel und Neigungswinkel die Messgröße erfasst.

## Claims

**1.** Method for the direction-dependent measurement of at least one lighting or radiometric characteristic quantity of an optical radiation source (2) installed in an object (1), wherein the method comprises:

- arranging the object (1) on a turntable (3) which has a rotation axis (31), the rotation axis (31) of the turntable (3) defining a first coordinate system, the origin (O) of which is formed by the point of intersection of the surface (32) of the turntable (3) with the rotation axis (31) and the spatial axis of which coincides with the rotation axis (31),
- wherein the object (1) is arranged on the turntable (3) in such a way that the radiation centroid of the optical radiation source (2) is spaced apart from the origin (O) of the first coordinate system and from the rotation axis (31),
- determining the position of the radiation centroid of the optical radiation source (2) relative to the origin (O) of the first coordinate system as a relative position,
- performing a gonioradiometric measurement which comprises rotation of the object (1) about an axis, the gonioradiometric measurement being carried out in the first coordinate system and the object (1) on the turntable (3) being rotated starting from an initial position (A1) about the rotation axis (31) of the turntable (3), and the rotation axis (31) of the turntable (3) constituting the axis of the gonioradiometric measurement,
- direction-dependently recording a measurement quantity of the radiation source (2) by means of the gonioradiometric measurement for a multiplicity of emission directions, emission directions which are defined in the first coordinate system respectively being assigned measured values of the measurement quantity,
- calculating the measurement quantity for the multiplicity of emission directions in a second coordinate system, in which the radiation centroid of the optical radiation source (2) lies at the origin of the coordinate system, from the direction-dependently recorded values of the measurement quantity which have been ascertained in the first coordinate system and the relative position,

- wherein the measurement quantity is the same as the characteristic quantity to be measured or the characteristic quantity to be measured is calculated from the measurement quantity.

2. Method according to Claim 1, **characterized in that** the object (1) is an automobile or a module, the radiation source (2) being installed in the automobile or the module and the automobile or the module being arranged on the turntable (3) in such a way that the radiation centroid of the optical radiation source (2) is spaced apart from the origin (O) of the first coordinate system.

3. Method according to Claim 1 or 2, **characterized in that** the calculation of the direction-dependent measurement quantity in the second coordinate system from the direction-dependently recorded values of the measurement quantity in the first coordinate system is carried out by mapping the coordinates of the values recorded in the first coordinate system onto corresponding coordinates in the second coordinate system.

4. Method according to one of the preceding claims, **characterized in that,** in addition to the rotation of the object (1) on the turntable (3), the gonioradiometric measurement comprises recording of the measurement quantity by means of one or more sensors (4) along a straight line as a function of the position (S) along this line.

5. Method according to Claim 4, **characterized in that** the illuminance is measured as the measurement quantity and the luminous intensity as the characteristic quantity to be measured of the radiation source (2) is calculated from the illuminance with the following formula:

$$I = \frac{E \cdot d^2}{\cos H \cdot \cos V}$$

where

I is the luminous intensity,
E is the measured illuminance,
d is the distance between the light source and the sensor and
(H,V) are the angles at which a sensor oriented rigidly parallel to the X axis has been illuminated, the X axis running perpendicular to the rotation axis (31) in a plane, that is to say
H corresponds to the azimuth angle $\varphi$, and
V corresponds to 90° minus the polar angle $\theta$.

6. Method according to Claim 4 or 5, **characterized in that** the first coordinate system is a cylindrical coordinate system, and the coordinates of the values recorded in the first coordinate system are converted in a first step to a further cylindrical coordinate system, at the origin of which the radiation centroid of the radiation source (2) lies, and are converted in a second step to a spherical coordinate system, at the origin of which the radiation centroid of the radiation source (2) lies, the spherical coordinate system being the second coordinate system.

7. Method according to Claim 6, **characterized in that,** for each emission direction, the azimuth angle (H) and the elevation angle (V) of the sensor position (P) in the second coordinate system are calculated from the rotation angle (D) of the turntable (3) and the height (S) of the sensor (4) in the first coordinate system, and the value of the measurement quantity measured by the sensor (4) in question is assigned to this emission direction defined by azimuth angle (H) and elevation angle (V), while being corrected by the range and the angle of incidence with respect to the sensor (4) in order to obtain the characteristic quantity from the measurement quantity.

8. Method according to one of Claims 1 to 3, **characterized in that,** in addition to the rotation of the object (3) on the turntable (3), the gonioradiometric measurement comprises recording of the measurement quantity by means of a statically arranged camera (7), the radiation emitted by the radiation source (2) being reflected at a reflective measurement wall (5) with diffuse reflection and being recorded by the camera (7) as a luminance distribution on the measurement wall for at least two settings of the turntable (3), and the luminance distribution recorded by the camera (7) being converted with the aid of a coordinate transformation into a luminance distribution in the second coordinate system, the luminance distribution constituting the measurement quantity.

9. Method according to Claim 8, **characterized in that,** in addition, a further sensor (8) is illuminated directly and the signal recorded by this sensor (8) is used for a calibration of the camera (7).

10. Method according to one of Claims 1 to 3, **characterized in that,** in addition to the rotation of the object (1) on the turntable (3), the gonioradiometric measurement involves tilting of the turntable (3) or object (1) about an axis perpendicular to the rotation axis (31), the object (1) being rotated for a multiplicity of inclination angles and the measurement quantity being recorded for each combination of rotation angle and inclination angle, the measurement quantity being recorded on the basis of the gonioradiometric measurement on a spherical surface around the radiation centroid of the radiation source (2).

11. Method according to Claim 10, **characterized in that** a static sensor, which acquires a measurement value of the emitted radiation for each combination of rotation angle and inclination angle, is used for the gonioradiometric measurement.

12. Method for the direction-dependent measurement of at least one lighting or radiometric characteristic quantity of an optical radiation source (2) installed in an object (1), wherein the method comprises:

- arranging the object (1) at or on a holding element, which is intended and configured to rotate the object (1) about a first axis and about a second axis which is perpendicular to the first axis, the object (1) being arranged on the holding element in such a way that the radiation centroid of the optical radiation source (2) lies outside the origin (O) of a first coordinate system formed by the first axis and the second axis,
- determining the position of the radiation centroid of the optical radiation source (2) relative to the origin (O) of the first coordinate system as a relative position,
- performing a gonioradiometric measurement which comprises rotation of the object (1) about the two axes, the gonioradiometric measurement being carried out in the first coordinate system,
- direction-dependently recording a measurement quantity of the radiation source (2) by means of the gonioradiometric measurement for a multiplicity of emission directions, emission directions which are defined in the first coordinate system respectively being assigned measured values of the measurement quantity,
- calculating the direction-dependent measurement quantity for the multiplicity of emission directions in a second coordinate system, in which the radiation centroid of the optical radiation source (2) lies at the coordinate origin, from the direction-dependently recorded values of the measurement quantity which have been ascertained in the first coordinate system and the relative position,
- wherein the measurement quantity is the same as the characteristic quantity to be measured or the characteristic quantity to be measured is calculated from the measurement quantity.

13. Gonioradiometer for the direction-dependent measurement of at least one lighting or radiometric characteristic quantity of an optical radiation source (2) installed in an object (1), wherein the gonioradiometer comprises:

- a turntable (3) which has a rotation axis (31), the rotation axis (31) of the turntable (3) defining a first coordinate system, the origin (O) of which is formed by the point of intersection of the surface of the turntable (3) with the rotation axis (31) and the spatial axis of which coincides with the rotation axis (31), and the turntable (3) being intended to receive the object (1) in such a way that the radiation centroid of the optical radiation source (2) is spaced apart from the origin (O) of the first coordinate system and from the rotation axis (31),
- at least one sensor (4) which is configured and intended to measure a measurement quantity of the radiation source (2),
- wherein the turntable (3) and the at least one sensor are configured to carry out a gonioradiometric measurement, which comprises rotation of the object (1) about the rotation axis (31) of the turntable (3), in the first coordinate system, the measurement quantity being direction-dependently recorded by means of the gonioradiometric measurement for a multiplicity of emission directions, emission directions which are defined in the first coordinate system respectively being assigned measured values of the measurement quantity,
- a calculation unit (6) which is intended and configured to calculate the measurement quantity for the multiplicity of emission directions in a second coordinate system, in which the radiation centroid of the optical radiation source (2) lies at the origin of the coordinate system, from the position of the radiation centroid of the optical radiation source (2) relative to the origin of the first coordinate system and from the direction-dependently recorded values of the measurement quantity which have been ascertained in the first coordinate system,
- the calculation unit (6) furthermore being intended and configured to calculate the characteristic quantity to be measured from the measurement quantity, if the measurement quantity is not already the characteristic quantity to be measured.

14. Gonioradiometer according to Claim 13, **characterized in that** the gonioradiometer furthermore comprises:

- a reflective measurement wall (5) with diffuse reflection, which reflects the light emitted by the radiation source (2),
- a camera (7) arranged statically and immovably and having a 2-dimensional sensor chip, the pixels of the sensor chip forming the at least one sensor,
- wherein the camera (7) is arranged and configured in such a way that it records light reflected at the measurement wall (5) for at least two settings of the turntable (3), the reflected light being imaged onto the sensor chip of the camera (7) and the reflected light being recorded by the camera (7) as a luminance distribution on the measurement wall (5),
- wherein the calculation unit (6) is configured to convert the distribution of the luminance, recorded by the camera (7), into a luminance distribution in the second coordinate system by means of a coordinate transformation.

**15.** Gonioradiometer according to Claim 13, **characterized in that**

- the at least one sensor comprises a static sensor,
- in addition to rotation about the rotation axis (31), the turntable (3) is configured to tilt an object (1) arranged on it about an axis perpendicular to the rotation axis (31), or the object (1) is arranged tiltably about such an axis,
- wherein the turntable (3), or the object (1), and the at least one sensor cooperate during a gonioradiometric measurement in such a way that the object (1) is rotated during the gonioradiometric measurement for a multiplicity of inclination angles and the static sensor records the measurement quantity for each combination of rotation angle and inclination angle.

**Revendications**

**1.** Procédé pour la mesure directionnelle d'au moins une grandeur caractéristique photométrique ou radiométrique d'une source de rayonnement optique (2) installée dans un objet (1), le procédé comprenant les étapes consistant à :

- disposer l'objet (1) sur un plateau tournant (3) qui présente un axe de rotation (31), l'axe de rotation (31) du plateau tournant (3) définissant un premier système de coordonnées dont l'origine (O) est formé par le point d'intersection de la surface (32) du plateau tournant (3) avec l'axe de rotation (31) et dont l'axe spatial coïncide avec l'axe de rotation (31),
- dans lequel l'objet (1) est disposé sur le plateau tournant (3) de telle sorte que le point central de rayonnement de la source de rayonnement optique (2) est espacé de l'origine (O) du premier système de coordonnées et de l'axe de rotation (31),
- déterminer la position du point central de rayonnement de la source de rayonnement optique (2) par rapport à l'origine (O) du premier système de coordonnées comme une position relative,
- effectuer une mesure gonioradiométrique qui comprend une rotation de l'objet (1) autour d'un axe, dans lequel la mesure gonioradiométrique est effectuée dans le premier système de coordonnées et l'objet (1) sur le plateau tournant (3) est amené à tourner en partant d'une position de départ (A1) autour de l'axe de rotation (31) du plateau tournant (3), et l'axe de rotation (31) du plateau tournant (3) représente l'axe de la mesure gonioradiométrique,
- détecter de manière directionnelle une grandeur de mesure de la source de rayonnement (2) au moyen de la mesure gonioradiométrique pour une pluralité de directions d'émission, dans lequel respectivement des valeurs mesurées de la grandeur de mesure sont associées aux directions d'émission qui sont définies dans le premier système de coordonnées,
- calculer la grandeur de mesure pour la pluralité de directions d'émission dans un deuxième système de coordonnées, dans lequel le point central de rayonnement de la source de rayonnement optique (2) se trouve dans l'origine du système de coordonnées, à partir des valeurs détectées de manière directionnelle de la grandeur de mesure, qui ont été établies dans le premier système de coordonnées, et à partir de la position relative,
- dans lequel la grandeur de mesure est égale à la grandeur caractéristique à mesurer, ou la grandeur caractéristique à mesurer est calculée à partir de la grandeur de mesure.

**2.** Procédé selon la revendication 1, **caractérisé en ce que** l'objet (1) est une voiture ou un sous-ensemble, dans lequel la source de rayonnement (2) est installée dans la voiture ou dans le sous-ensemble, et la voiture ou le sous-ensemble est disposé(e) sur de plateau tournant (3) de telle sorte que le point central de rayonnement de la source de rayonnement optique (2) est espacé de l'origine (O) du premier système de coordonnées.

**3.** Procédé selon la revendication 1 ou 2, **caractérisé en ce que** le calcul de la grandeur de mesure directionnelle dans le deuxième système de coordonnées est effectué à partir des valeurs détectées de manière directionnelle de la grandeur de mesure dans le premier système de coordonnées **en ce que** les coordonnées des valeurs détectées dans le premier système de coordonnées sont représentées sur des coordonnées correspondantes dans le deuxième système de coordonnées.

**4.** Procédé selon l'une quelconque des revendications précédentes, **caractérisé en ce que** la mesure gonioradiométrique comprend en plus de la rotation de l'objet (1) sur le plateau tournant (3) la détection de la grandeur de mesure au moyen d'un ou de plusieurs capteurs (4) le long d'une ligne droite en fonction de la position (S) le long de cette ligne.

**5.** Procédé selon la revendication 4, **caractérisé en ce que** comme grandeur de mesure, l'intensité lumineuse est mesurée, et à partir de l'intensité lumineuse, la luminosité est calculée en tant que grandeur caractéristique à mesurer de la source de rayonnement (2) par la formule suivante :

$$I = \frac{E \cdot d^2}{cosH \cdot cosV}$$

où

    I la luminosité,
    E l'intensité lumineuse mesurée,
    d la distance entre la source de lumière et le capteur, et
    (H,V) les angles selon lesquels un capteur aligné de manière fixe en parallèle à l'axe X serait éclairé, l'axe X passant dans un plan perpendiculaire à l'axe de rotation (31), c'est-à-dire
    H est l'angle d'azimut $\varphi$, et
    V est 90° moins l'angle polaire $\theta$.

**6.** Procédé selon la revendication 4 ou 5, **caractérisé en ce que** le premier système de coordonnées est un système de coordonnées cylindriques, les coordonnées des valeurs détectées dans le premier système de coordonnées sont converties dans une première étape en un autre système de coordonnées cylindriques dans l'origine duquel se trouve le point central de rayonnement de la source de rayonnement (2), et sont converties dans une deuxième étape en un système de coordonnées sphériques dans l'origine duquel se trouve le point central de rayonnement de la source de rayonnement (2), le système de coordonnées sphériques étant le deuxième système de coordonnées.

**7.** Procédé selon la revendication 6, **caractérisé en ce que** pour chaque direction de rayonnement, l'angle d'azimut (H) et l'angle d'élévation (V) de la position de capteur (P) dans le deuxième système de coordonnées sont calculés à partir de l'angle de rotation (D) du plateau tournant (3) et de la hauteur (S) du capteur (4) dans le premier système de coordonnées, et la valeur de la grandeur de mesure, mesurée par le capteur (4) en question, est associée à cette direction de rayonnement définie par l'angle d'azimut (H) et l'angle d'élévation (V), dans lequel elle est corrigée par l'éloignement et l'angle d'incidence par rapport au capteur (4) afin d'obtenir la grandeur caractéristique à partir de la grandeur de mesure.

**8.** Procédé selon l'une quelconque des revendications 1 à 3, **caractérisé en ce que** la mesure gonioradiométrique comprend en plus de la rotation de l'objet (3) sur le plateau tournant (3) la détection de la grandeur de mesure au moyen d'une caméra (7) disposée de manière stationnaire, dans lequel le rayonnement émis par la source de rayonnement (2) est réfléchi sur une paroi de mesure réfléchissante (5) avec une réflexion diffuse, et est détecté par la caméra (7) sous forme de distribution de luminance sur la paroi de mesure pour au moins deux positions du plateau tournant (3), et la distribution de luminance détectée par la caméra (7) est convertie à l'aide d'une transformation de coordonnées en une distribution de luminance dans le deuxième système de coordonnées, la distribution de luminance étant la grandeur de mesure.

**9.** Procédé selon la revendication 8, **caractérisé en ce qu'**en plus, un autre capteur (8) est éclairé directement, et le signal détecté par ce capteur (8) est mis en œuvre pour un étalonnage de la caméra (7).

**10.** Procédé selon l'une quelconque des revendications 1 à 3, **caractérisé en ce que** la mesure gonioradiométrique prévoit en plus de la rotation de l'objet (1) sur le plateau tournant (3) un basculement du plateau tournant (3) ou de l'objet (1) autour d'un axe perpendiculairement à l'axe de rotation (31), dans lequel l'objet (1) est amené à tourner pour une pluralité d'angles d'inclinaison, et la grandeur de mesure est détectée pour chaque combinaison d'angle de rotation et d'angle d'inclinaison, dans lequel la grandeur de mesure est détectée en raison de la mesure gonioradiométrique sur une surface sphérique autour du point central de rayonnement de la source de rayonnement (2).

11. Procédé selon la revendication 10, **caractérisé en ce que** pour la mesure gonioradiométrique, un capteur stationnaire est mis en œuvre qui enregistre pour chaque combinaison d'angle de rotation et d'angle d'inclinaison une valeur de mesure pour le rayonnement émis.

12. Procédé pour la mesure directionnelle d'au moins une grandeur caractéristique photométrique ou radiométrique d'une source de rayonnement optique (2) installé dans un objet (1), le procédé présentant les étapes consistant à :

- disposer l'objet (1) au niveau d'un ou sur un élément de retenue qui est prévu et réalisé pour faire tourner l'objet (1) autour d'un premier axe et autour d'un deuxième axe perpendiculaire au premier axe, dans lequel l'objet (1) est disposé au niveau de l'élément de retenue de telle sorte que le point central de rayonnement de la source de rayonnement optique (2) se trouve à l'extérieur de l'origine (O) d'un premier système de coordonnées formé par le premier axe et le deuxième axe,
- déterminer la position du point central de rayonnement de la source de rayonnement optique (2) par rapport à l'origine (O) du premier système de coordonnées comme une position relative,
- effectuer une mesure gonioradiométrique qui comprend une rotation de l'objet (1) autour des deux axes, la mesure gonioradiométrique étant effectuée dans le premier système de coordonnées,
- détecter de manière directionnelle une grandeur de mesure de la source de rayonnement (2) au moyen de la mesure gonioradiométrique pour une pluralité de directions d'émission, dans lequel respectivement des valeurs mesurées de la grandeur de mesure sont associées aux directions d'émission qui sont définies dans le premier système de coordonnées,
- calculer la grandeur de mesure directionnelle pour la pluralité de directions d'émission dans un deuxième système de coordonnées, dans lequel le point central de rayonnement de la source de rayonnement optique (2) se trouve dans l'origine du système de coordonnées, à partir des valeurs détectées de manière directionnelle de la grandeur de mesure, qui ont été établies dans le premier système de coordonnées, et à partir de la position relative,
- dans lequel la grandeur de mesure est égale à la grandeur caractéristique à mesurer, ou la grandeur caractéristique à mesurer est calculée à partir de la grandeur de mesure.

13. Gonioradiomètre pour la mesure directionnelle d'au moins une grandeur caractéristique photométrique ou radiométrique d'une source de rayonnement optique (2) installée dans un objet (1), le gonioradiomètre comprenant :

- un plateau tournant (3) qui présente un axe de rotation (31), l'axe de rotation (31) du plateau tournant (3) définissant un premier système de coordonnées dont l'origine (O) est formé par le point d'intersection de la surface du plateau tournant (3) avec l'axe de rotation (31) et dont l'axe spatial coïncide avec l'axe de rotation (31), et dans lequel le plateau tournant (3) est prévu pour recevoir l'objet (1) de telle sorte que le point central de rayonnement de la source de rayonnement optique (2) est espacé de l'origine (O) du premier système de coordonnées et de l'axe de rotation (31),
- au moins un capteur (4) qui est réalisé et prévu pour mesurer une grandeur de mesure de la source de rayonnement (2),
- dans lequel le plateau tournant (3) et ledit au moins un capteur sont réalisés pour effectuer une mesure gonioradiométrique dans le premier système de coordonnées qui comprend une rotation de l'objet (1) autour de l'axe de rotation (31) du plateau tournant (3), dans lequel la grandeur de mesure est détectée de manière directionnelle au moyen de la mesure gonioradiométrique pour une pluralité de directions d'émission, dans lequel respectivement des valeurs mesurées de la grandeur de mesure sont associées aux directions d'émission qui sont définies dans le premier système de coordonnées,
- une unité de calcul (6) qui est prévue et réalisée pour calculer la grandeur de mesure pour la pluralité de directions d'émission dans un deuxième système de coordonnées, dans lequel le point central de rayonnement de la source de rayonnement optique (2) se trouve dans l'origine du système de coordonnées, à partir de la position du point central de rayonnement de la source de rayonnement optique (2) par rapport à l'origine du premier système de coordonnées et à partir des valeurs détectées de manière directionnelle de la grandeur de mesure qui ont été établies dans le premier système de coordonnées,
- dans lequel l'unité de calcul (6) est en outre prévue et réalisée pour calculer la grandeur caractéristique à mesurer à partir de la grandeur de mesure, dans la mesure où la grandeur de mesure n'est pas déjà la grandeur caractéristique à mesurer.

**14.** Gonioradiomètre selon la revendication 13, **caractérisé en ce que** le gonioradiomètre présente en outre :

- une paroi de mesure réfléchissante (5) à réflexion diffuse qui réfléchit la lumière émise par la source de rayonnement (2),
- une caméra (7) disposée de manière stationnaire et immobile, pourvue d'une puce de capteur bidimensionnel, dans lequel les pixels de la puce de capteur constituent ledit au moins un capteur,
- dans lequel la caméra (7) est disposée et réalisée de telle sorte qu'elle détecte la lumière réfléchie sur la paroi de mesure (5) pour au moins deux positions du plateau tournant (3), dans lequel la lumière réfléchie est représentée sur la puce de capteur de la caméra (7), et dans lequel la lumière réfléchie de la caméra (7) est détectée comme une distribution de luminance sur la paroi de mesure (5),
- dans lequel l'unité de calcul (6) est réalisée pour convertir la distribution de la luminance, détectée par la caméra (7), à l'aide d'une transformation de coordonnées en une distribution de luminance dans le deuxième système de coordonnées.

**15.** Gonioradiomètre selon la revendication 13, **caractérisé en ce que**

- ledit au moins un capteur comprend un capteur stationnaire,
- en plus d'une rotation autour de l'axe de rotation (31), le plateau tournant (3) est réalisé pour faire basculer un objet (1) disposé sur celui-ci autour d'un axe perpendiculaire à l'axe de rotation (31), ou l'objet (1) est disposé de manière à pouvoir basculer autour d'un tel axe,

dans lequel le plateau tournant (3) ou l'objet (1) et ledit au moins un capteur coopèrent lors d'une mesure gonioradiométrique de telle sorte que l'objet (1) lors de la mesure gonioradiométrique est amené à tourner pour une pluralité d'angles d'inclinaison, et le capteur stationnaire détecte la grandeur de mesure pour chaque combinaison d'angle de rotation et d'angle d'inclinaison.

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016116300 A1
- US 2017165848 A1